# EUROPEAN PATENT APPLICATION

(11) **EP 4 461 572 A1**
(43) Date of publication of application: **13.11.2024**
(21) Application number: 23173897.2
(22) Date of filing: 17.05.2023
(51) Int. Cl.: B60H 1/00, B01D 45/12, B01D 46/42, B01D 46/44, B01D 46/46, B60H 1/24, B60H 3/06

(54) **AIR QUALITY MONITORING AND CONTROL SYSTEM**

(30) Priority: 12.05.2023 US 202318196507
(71) Applicant: The Sy-Klone Company, LLC, Jacksonville, FL 32219 (US)
(72) Inventor: MOREDOCK, Jeffrey L., Jacksonville, FL 32219 (US); MOREDOCK, James G., Jacksonville, FL 32219 (US)
(74) Representative: Appleyard Lees IP LLP

(57) **Abstract**

An air quality monitoring and control method includes providing at least one sensor inside of an enclosure; providing an advisor module (1, 1a, 1b, 1c, 1d) configured to receive data from the at least one sensor; providing at least one airflow control valve (2, 3) regulating air between inside and outside of the enclosure; and controlling, by the advisor module (1, 1a, 1b, 1c, 1d) , the at least one airflow control valve (2, 3) based on the data received from the at least one sensor to control air quality within the enclosure. Alternatively, the method includes providing at least one sensor inside of the enclosure, the at least one sensor including a dust sensor (29c); providing a stand-alone recirculation filtration device (5) in the enclosure; providing an advisor module (1, 1a, 1b, 1c, 1d) configured to receive data from the dust sensor (29c); and controlling, by the advisor module (1, 1a, 1b, 1c, 1d) , the stand-alone recirculation filtration device (5) or an HVAC fan based on the data received from the dust sensor (29c).

## Description

### BACKGROUND

The present disclosure relates to an air quality monitoring and control system for monitoring and controlling air quality within an enclosure, such as a vehicle cabin.

To maintain air quality inside an enclosure, multiple environmental conditions must be maintained. Conventionally, this has presented problems due to the inability to control certain variables, such as CO₂ concentrations, which come from the operator exhaling in, for example, an enclosure such as a vehicle cabin (also referred to as a "cab"). Fresh air intake and cab leakage are additional variables which have been difficult to measure and control. To keep dust out of the cab, the cab must be under continuous positive pressurization. Continuous and consistent pressurization while keeping dust out of the cab is difficult to achieve in a static system due to changing factors such as dirt load on an air filter, operator interface with the HVAC blower control, opening doors and windows, and dust on the operator vestments brought into the cab.

Prior attempts at addressing multiple environmental conditions are inadequate to address the real-world operating conditions of environmental cabs and to meet current international air quality standards. The use of pressure sensors, pressure switches, and CO₂ sensors in cabs, for instance, is generally not integrated, and no current solutions incorporate air valve control (particularly multiple valves working together) responsive to multiple sensors' data, nor electronics-based shut on/off of peripherals for a proactive, comprehensive cab air quality monitoring and control system.

Another problem in this field of technology is that, when intake air passes through the ventilation system, it encounters resistance to flow created by the ventilation plumbing and HVAC system, i.e., the blower motor and evaporator and heater cores. Any leakage allows the intake air to escape, and if the leakage is in the plumbing or in the HVAC system, the leakage can be external to, and upstream of, the enclosure. Therefore, the measured air volume at intake, used conventionally to determine air volume in the enclosure, may not be the same as the air volume entering the enclosure. With a minimum requirement of, for example, 25 CFM of intake air that must reach the enclosure for safe breathing, related systems are unable to assure that the minimum requirement is met unless additional intake air is provided to overcome potential, unmeasured leakage prior to entering the enclosure. Compensating with additional intake air, as occurs in several related systems, results in shorter filter life, additional energy draw on the system and may result in over-pressurization. The inventors of this disclosure discovered that a solution to this problem lies in measuring the exhaust airflow from the enclosure. This is not possible when leakage occurs from unsealed barriers or inadvertent breaches of air, as in the related systems. In the present disclosure, the problems in the art are resolved in part by sealing the enclosure to allow significant pressurization while simultaneously ensuring that the air leaving the enclosure must pass through an orifice that is under control (e.g., an exhaust air valve) or an orifice that, minimally, directs air that can be measured (e.g., a manual valve or open orifice). Using an exhaust air valve, the differential pressure between ambient air pressure and the pressure in the flow path may be detected. From this detected data, the air volume passing through the controlled enclosure leakage flow path (i.e., the exhaust air valve) may be determined, and actions to adjust the intake air volume can be carried out as discussed below.

In addition, related systems use intake airflow exclusively to create and maintain enclosure pressurization. The level of pressure in the enclosures of the related systems is maintained solely by increasing or decreasing the intake air volume. The related systems are therefore unable to drive optimal air exchange through the enclosure, as increasing intake air to drive air exchange might cause pressurization to rise to undesired levels. The present disclosure solves this problem with the ability to adjust the enclosure pressure by opening or closing the intake air valve and/or the exhaust air valve. Doing so allows for the intake air to be increased and the exhaust air to be increased to maintain a constant level of enclosure pressurization, while increasing the air exchange rate in the enclosure. This approach produces advantageous effects. Specifically, particulate is more rapidly exhausted from the enclosure with the exhausted airflow, and the increased intake airflow accelerates the dilution of CO₂ in the enclosure. With the appropriate adjustments to the intake and exhaust air valves, the air exchange is optimized at a rate that continuously ejects particulate, while maintaining low concentrations of CO₂, and an acceptable level of enclosure pressurization. These simultaneous controls are unique to this disclosure and are but one example of multi-variable control capability.

Related systems generally allow for only a single variable to be addressed at a time. This is a disadvantageous, monolithic approach. In contrast, in the present disclosure, a hierarchy of controls drives integrated system logic, based upon intended application and the embodiments present, to allow for monitoring, adjustment and maintenance of several variables within acceptable ranges, including CO₂ (or other toxic gases), dust, pressure, relative temperature of airflow, and energy usage of the system.

The monitoring system and valves in the present disclosure can be utilized with several traditional intake air systems across a range of manufacturers to support the advancement of enclosure air quality. Intake air systems, as a category, should be read to include pressurizer blowers, pressurizers, precleaners, fresh air filtration systems, and/or any combination of the foregoing.

Additionally, the monitoring system and valves in the present disclosure can be utilized with traditional HVAC systems across a range of manufacturers, or with no installed HVAC system.

The monitoring and control system has the ability to log and transmit its data via LAN/WAN, WiFi, Bluetooth, cellular phone application or user terminal, radio capabilities, general packet radio service (GPRS), or other suitable communication means. Data specific to the movement or operation of the valves may be reported (transmitted), in combination with, or independent of, data from system-related devices and sensors.. Examples of transmitting such information received by the advisor module may be understood with reference to U.S. Patent Application No. 16/022,941 filed June 29, 2018 (now U.S. Patent No. 10,850,222 issued December 1, 2020), incorporated herein by reference in its entirety.

### SUMMARY

Exemplary embodiments of the broad inventive principles described herein address the aforementioned problems by providing a comprehensive cab air quality monitoring and control system that proactively monitors, adjusts and maintains devices within and outside the cab, such as intake and exhaust air valves and/or a stand-alone recirculation filtration device in order to control parameters such as airflow (and relative temperature of said airflow), CO₂ (and/or other gases), cab pressure, and dust concentration.

It should be understood that the following disclosure is not limited to monitoring and controlling air quality within a cab. Rather, there are many different enclosures and environments to which the following disclosure is applicable, such as airflow management through an electrical cabinet or an environmental enclosure, including one which does not have a human occupant. As non-limiting examples, the following disclosed embodiments can be applied to a vehicle cab both with and without a human occupant or to an electrical or other enclosure where clean, regulated airflow is preferred or required.

The exemplary embodiments disclosed herein can be used with a wide variety of intake air systems, essentially any system that brings fresh air through an aperture into an enclosure. As one non-limiting example, the features of this disclosure may be employed with the intake air system (i.e., the air precleaner and method) associated with the Sy-Klone RESPA^{®} Cab Air Quality System. Additionally, features of the embodiments can be understood with reference to the intake air systems (i.e., air precleaners and methods) disclosed in commonly owned U.S. Patent Application No. 17/356,973 filed June 24, 2021, U.S. Patent Application No. 11/877,036 filed October 23, 2007 (now U.S. Patent No. 8,007,565 issued August 30, 2011) and U.S. Patent Application No. 14/536,849 filed November 10, 2014 (now U.S. Patent No. 9,700,828 issued July 11, 2017), the entire disclosures of which are incorporated herein by reference. However, as noted, the exemplary embodiments disclosed herein are not limited to use with the intake air system (i.e., air precleaner and method) associated with the Sy-Klone RESPA^{®} Cab Air Quality System. Additionally, the air quality monitoring and control system disclosures of U.S. Patent Application No. 17/092,819 filed November 9, 2020 (now U.S. Patent No. 11,517,841 issued December 6, 2022), U.S. Patent Application No. 16/022,941 filed June 29, 2018 (now U.S. Patent No. 10,850,222 issued December 1, 2020), and Provisional Application No. 62/527,276 filed June 30, 2017, are incorporated herein by reference in their entirety.

The monitoring system and its peripherals will follow software logic based on variable inputs for the application to control air quality for the cab or other enclosure. Essentially, the cab operator or owner sets acceptable variable parameters for the disclosed system, and the system uses its sensors and the present embodiments to collect the data, analyze the data, and effect the desired outcome to the greatest extent possible through electronic signals to and from valves and/or a stand-alone recirculation filtration device, which, in the full set of embodiments, can be done continuously and in real-time.

### BRIEF DESCRIPTION OF THE DRAWINGS

Figure 1A is a perspective view of an embodiment of the disclosed control system.
Figure 1B is an enclosure internal view of an embodiment of the disclosed control system.
Figure 1C is an explanatory diagram of an embodiment of the disclosed control system.
Figure 2A is a perspective view of an embodiment of the disclosed control system.
Figure 2B is an enclosure side view of an embodiment of the disclosed control system.
Figure 2C is an enclosure internal view of an embodiment of the disclosed control system taken along cross-sectional line A-A in Figure 2B.
Figure 2D is an explanatory diagram of an embodiment of the disclosed control system.
Figure 3A is a perspective view of an embodiment of the disclosed control system.
Figure 3B is an enclosure internal view of an embodiment of the disclosed control system.
Figure 3C is an explanatory diagram of an embodiment of the disclosed control system.
Figure 4A is a perspective view of an embodiment of the disclosed control system.
Figure 4B is an enclosure internal view of an embodiment of the disclosed control system.
Figure 4C is an explanatory diagram of an embodiment of the disclosed control system.
Figure 5A is a perspective view of an embodiment of the disclosed control system.
Figure 5B is an enclosure side view of an embodiment of the disclosed control system.
Figure 5C is an enclosure internal view of an embodiment of the disclosed control system taken along cross-sectional line A-A in Figure 5B.
Figure 5D is an explanatory diagram of an embodiment of the disclosed control system.
Figure 6A is a perspective view of an embodiment of the disclosed control system.
Figure 6B is an enclosure side view of an embodiment of the disclosed control system.
Figure 6C is an enclosure internal view of an embodiment of the disclosed control system taken along cross-sectional line A-A in Figure 6B.
Figure 6D is an explanatory diagram of an embodiment of the disclosed control system.
Figure 7A is a perspective view of an embodiment of the disclosed control system.
Figure 7B is an enclosure internal view of an embodiment of the disclosed control system.
Figure 7C is an explanatory diagram of an embodiment of the disclosed control system.
Figure 8A is a perspective view of an embodiment of the disclosed control system.
Figure 8B is an enclosure internal view of an embodiment of the disclosed control system.
Figure 8C is an explanatory diagram of an embodiment of the disclosed control system.
Figure 9A is a perspective view of an embodiment of the disclosed control system.
Figure 9B is an enclosure internal view of an embodiment of the disclosed control system.
Figure 9C is an explanatory diagram of an embodiment of the disclosed control system.
Figure 10A is a perspective view of an embodiment of the disclosed control system.
Figure 10B is an enclosure internal view of an embodiment of the disclosed control system.
Figure 10C is an explanatory diagram of an embodiment of the disclosed control system.
Figure 11A is a perspective view of an embodiment of the disclosed control system.
Figure 11B is an enclosure internal view of an embodiment of the disclosed control system.
Figure 11C is an explanatory diagram of an embodiment of the disclosed control system.
Figure 12A is a perspective view of an embodiment of the disclosed control system.
Figure 12B is an enclosure internal view of an embodiment of the disclosed control system.
Figure 12C is an explanatory diagram of an embodiment of the disclosed control system.
Figure 12D is an alternative explanatory diagram of an embodiment of the disclosed control system.
Figure 13A is a perspective view of an embodiment of the disclosed control system.
Figure 13B is an enclosure side view of an embodiment of the disclosed control system.
Figure 13C is an enclosure internal view of an embodiment of the disclosed control system taken along cross-sectional line A-A in Figure 13B.
Figure 13D is an explanatory diagram of an embodiment of the disclosed control system.
Figure 14A is a perspective view of an embodiment of the disclosed control system.
Figure 14B is an enclosure side view of an embodiment of the disclosed control system.
Figure 14C is an enclosure internal view of an embodiment of the disclosed control system taken along cross-sectional line A-A in Figure 14B.
Figure 14D is an explanatory diagram of an embodiment of the disclosed control system.
Figure 15A is a perspective view of an embodiment of the disclosed control system.
Figure 15B is an enclosure side view of an embodiment of the disclosed control system.
Figure 15C is an enclosure internal view of an embodiment of the disclosed control system taken along cross-sectional line A-A in Figure 15B.
Figures 15D is an explanatory diagram of an embodiment of the disclosed control system.
Figure 16A is a perspective view of an embodiment of the disclosed control system.
Figure 16B is an enclosure side view of an embodiment of the disclosed control system.
Figure 16C is an enclosure internal view of an embodiment of the disclosed control system taken along cross-sectional line A-A in Figure 16B.
Figure 16D is an alternative enclosure internal view of an embodiment of the disclosed control system taken along cross-sectional line A-A in Figure 16B.
Figures 16E is an explanatory diagram of an embodiment of the disclosed control system.
Figure 17A is a perspective view of an embodiment of the disclosed control system.
Figure 17B is an enclosure internal view of an embodiment of the disclosed control system.
Figure 18A is a perspective view of an embodiment of the disclosed control system.
Figure 18B is an enclosure internal view of an embodiment of the disclosed control system.
Figure 19 is an explanatory diagram of an embodiment of the disclosed control system.
Figure 20 is a perspective view of one example of an airflow control valve.
Figure 21 is a perspective view of one example of an airflow measurement device.
Figure 22 is a perspective view of one example of a stand-alone recirculation filtration device.
Figure 23 is a view of the stand-alone recirculation filtration device with the filter media removed, showing how the filter media is assembled into the main housing.

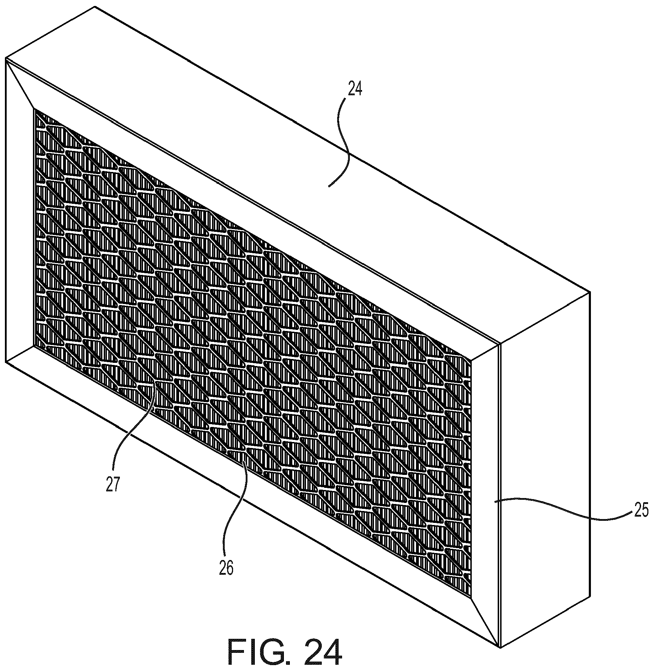

Figure 24 is a perspective view of one example of an HVAC panel filter.
Figure 25A is a perspective view of an embodiment of the disclosed control system.
Figure 25B is an enclosure side view of an embodiment of the disclosed control system.
Figure 25C is an enclosure internal view of an embodiment of the disclosed control system taken along cross-sectional line A-A in Figure 25B.
Figures 25D is an explanatory diagram of an embodiment of the disclosed control system.

### DETAILED DESCRIPTION OF EXEMPLARY EMBODIMENTS

Exemplary embodiments of an air quality monitoring and control system are described below in detail.

The air quality monitoring and control system according to one embodiment includes an intake air system, an advisor module, a plurality of sensors, one or more airflow control valves, including an intake air valve and/or an exhaust air valve, as well as an optional stand-alone recirculation filtration device and an optional HVAC system, discussed below. The components of the system communicate with each other to monitor all pertinent environmental data and drive logic that allows for the adjustment and maintenance of these environmental variables, in combination, to manage air quality inside of the cab environment. The advisor module and the sensors communicate with each other for this purpose, as discussed in detail below.

While the intake air system can be that of several manufacturers, the mechanism that integrates the control of intake airflow is the intake air valve installed downstream of the intake air system outlet.

For that reason, the intake air system is neither shown in the figures nor described in detail below. The details of one non-limiting example of the intake air system can be gathered from U.S. Patent No. 10,850,222, incorporated by reference in its entirety above. Because this disclosure focuses on the features of the air system control downstream of the intake air system (i.e., beginning at the air intake downstream of the intake air system's outlet), no further discussion of the intake air system will be provided.

### (1) Description of Advisor Module

The advisor module 1 (shown variously as 1a, 1b, 1c and 1d in the figures) controls the system based on sensor readings received and processed. The following discussion will be primarily focused on the functionality of the advisor module (also described as the "monitor"). For one non-limiting example of the structural details (including circuitry) of the advisor module, reference may be made to the discussion of the advisor module 300 (also called "RESPA^{®} Advisor") of U.S. Patent No. 10,850,222, incorporated by reference in its entirety above. As discussed below in greater detail, the advisor module reads data from the sensors and controls the other components of the system to establish and maintain enclosure air quality by adjusting, optimizing and maintaining multiple variables including, for example, CO₂, dust, enclosure pressure, intake filter life, relative temperature of airflow, and energy draw of the system.

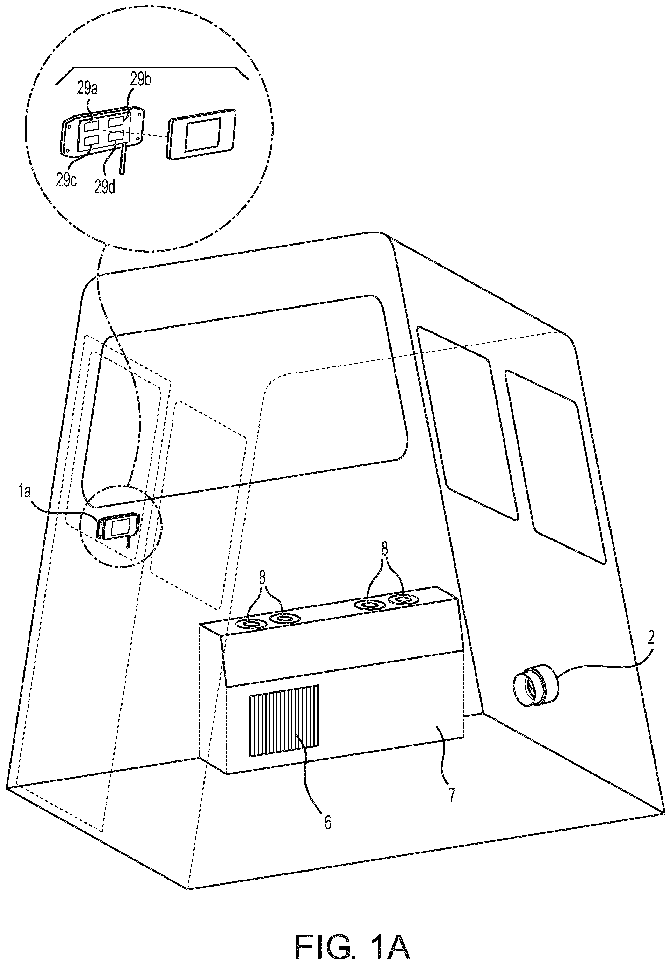

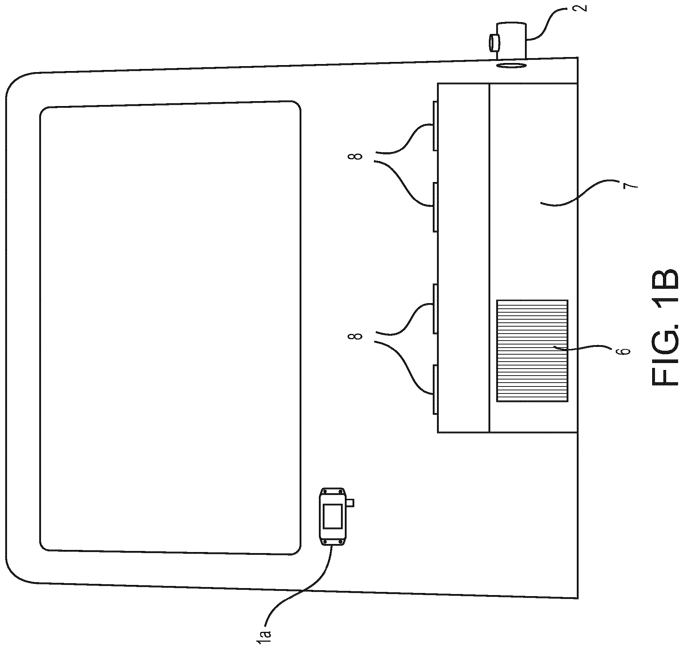

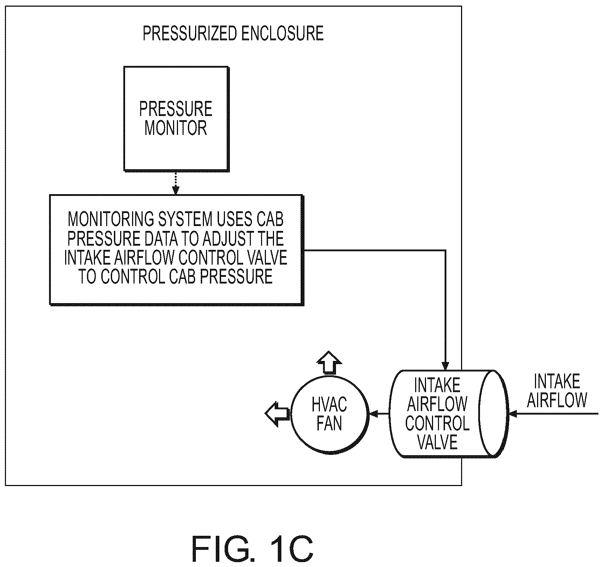

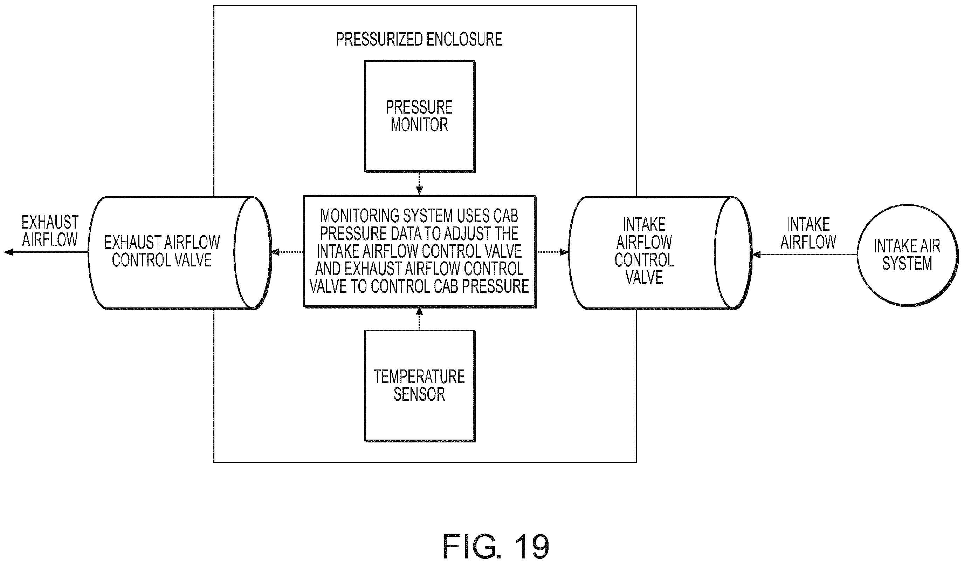

The advisor module may also have multiple sensors disposed on a printed circuit board (i.e., having circuitry including a processor) inside the advisor module. This is shown diagrammatically in Figure 1A, with sensors 29a, 29b, 29c and 29d disposed inside of the advisor module. It is important to note that the number of sensors is not limited to four, and the advisor module may have more or less than four sensors disposed therein. See also, for example, the relevant configurations of an example of the advisor module in U.S. Patent No. 10,850,222. These sensors may include a pressure sensor 29a, a CO₂ sensor 29b, and/or a dust sensor 29c. The advisor module may optionally have one or more additional sensors 29d. The additional sensor 29d may be, for example, a temperature sensor as shown in Figure 19. It is also important to note that the particular arrangement of the sensors on or inside the advisor module is not limited, and the arrangement shown in Figure 1A is merely diagrammatic.

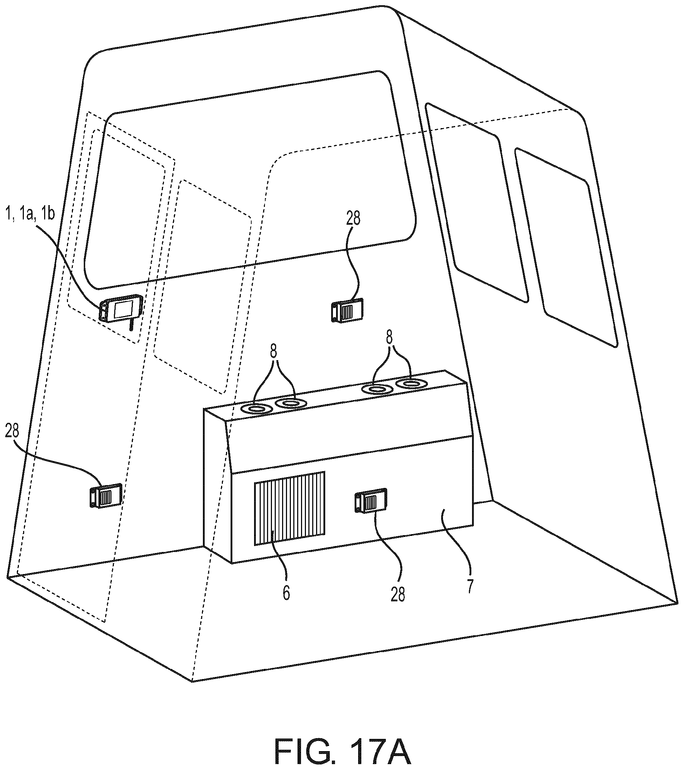

The sensors may be mounted inside the advisor module as shown in Figure 1A. Alternatively, one or more of the sensors may be remotely mounted within the enclosure as shown in Figures 17A to 18B, with those sensors (such as dust sensor 28) sending signals containing the sensor data to the advisor module.

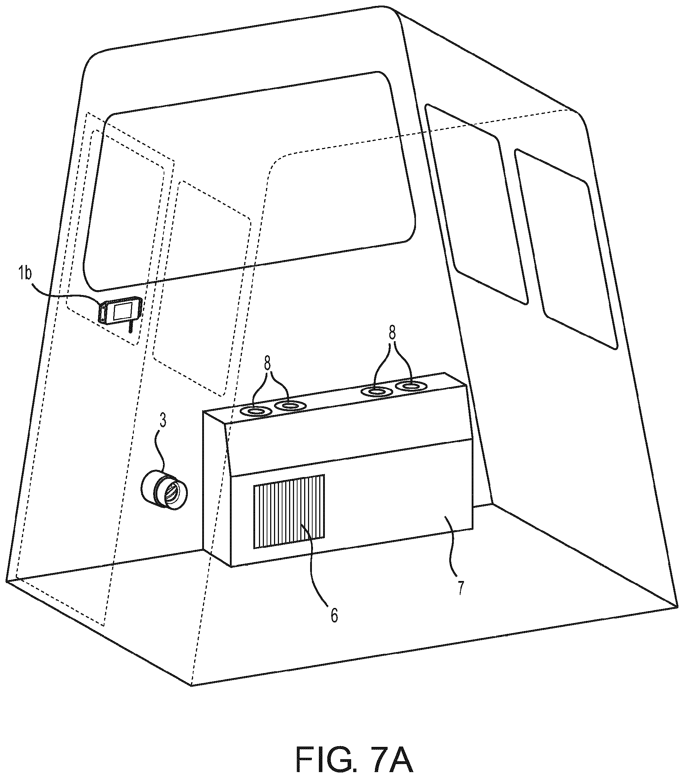

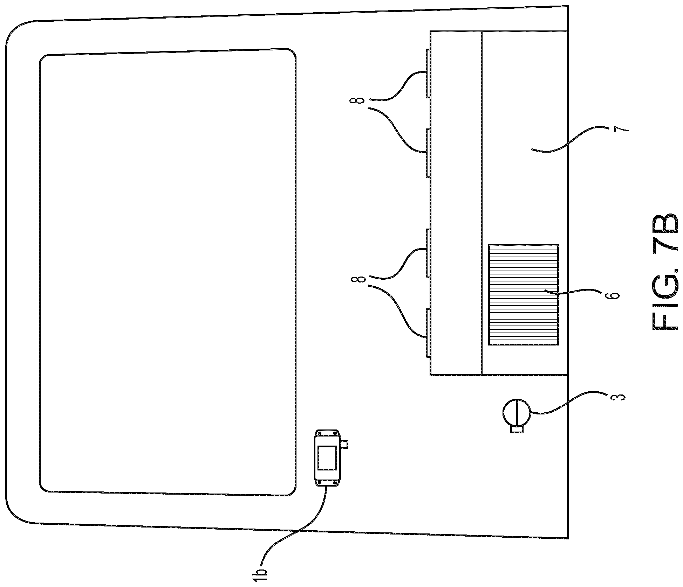

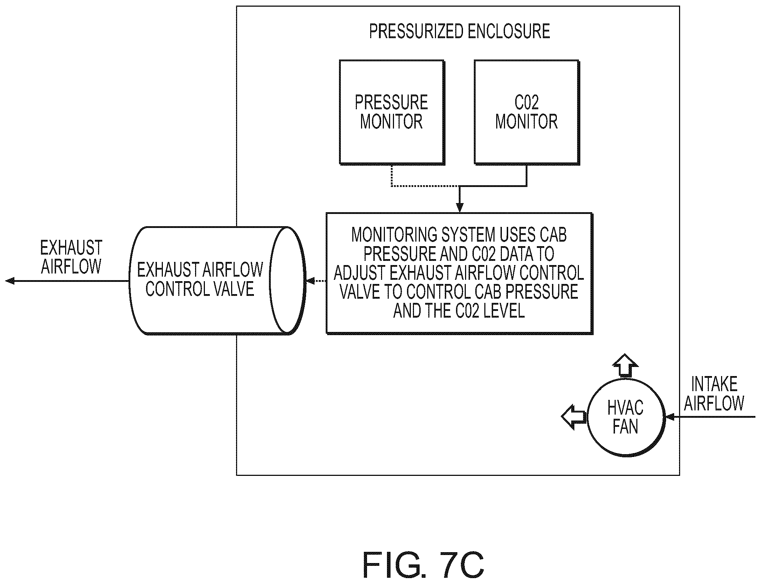

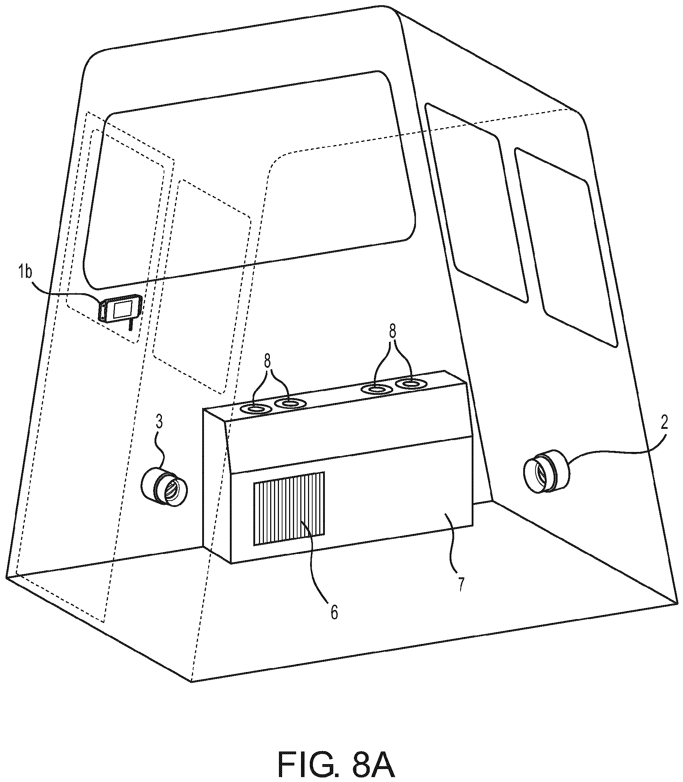

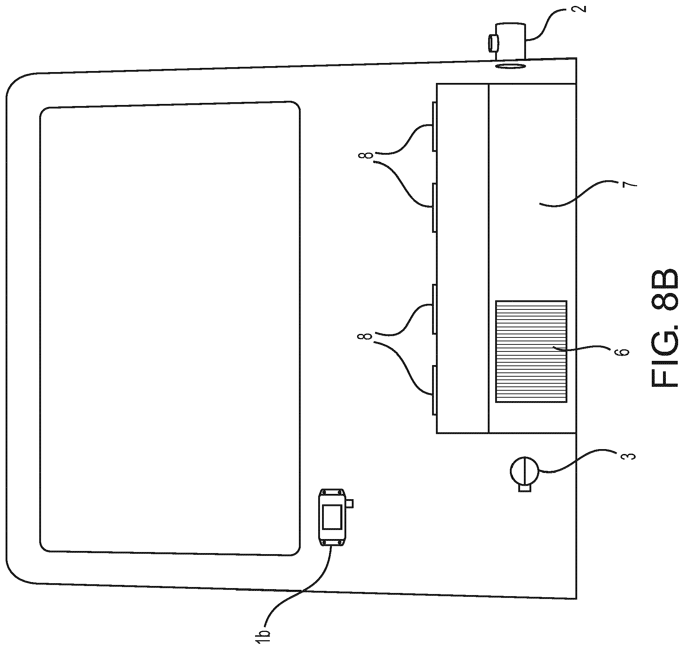

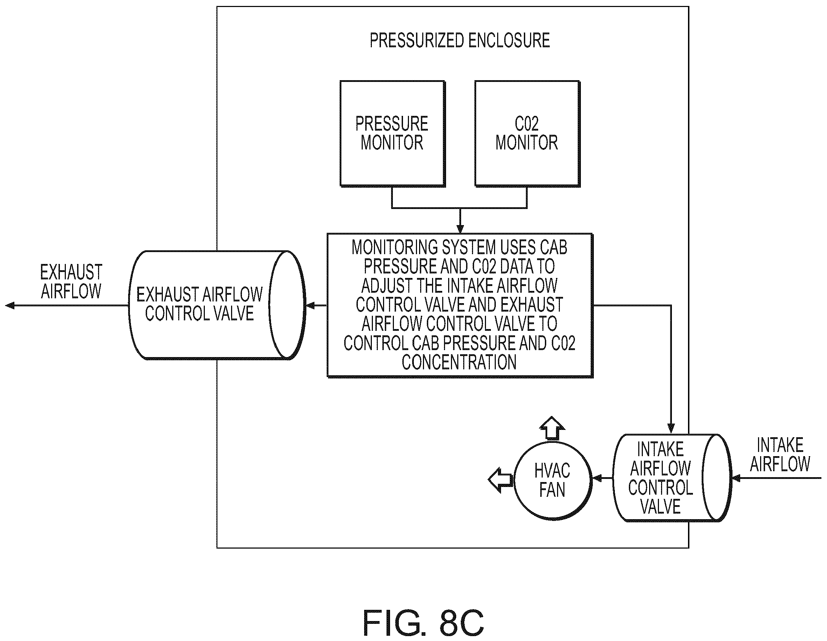

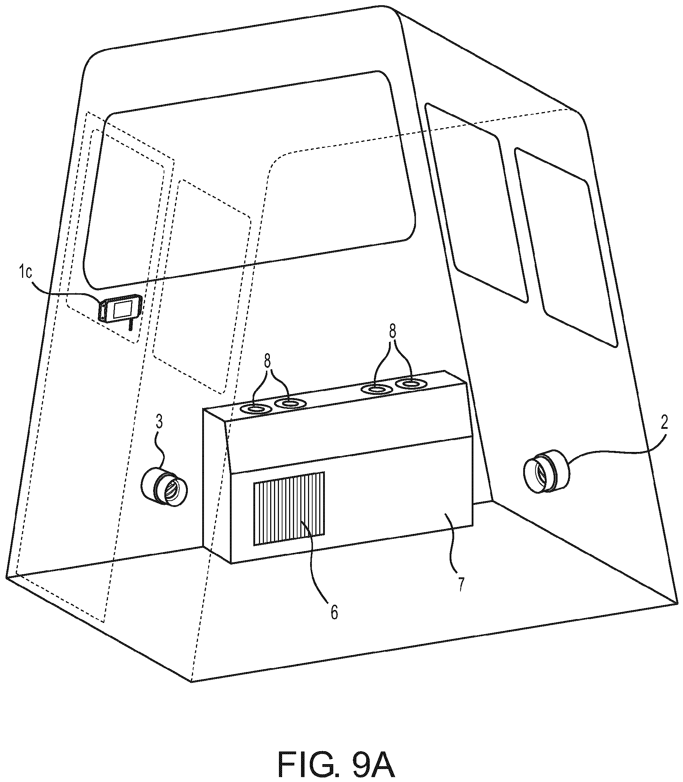

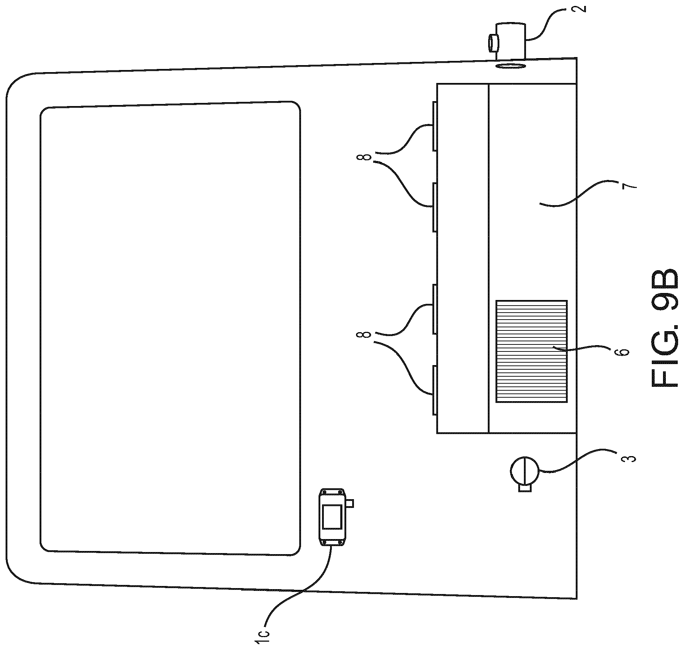

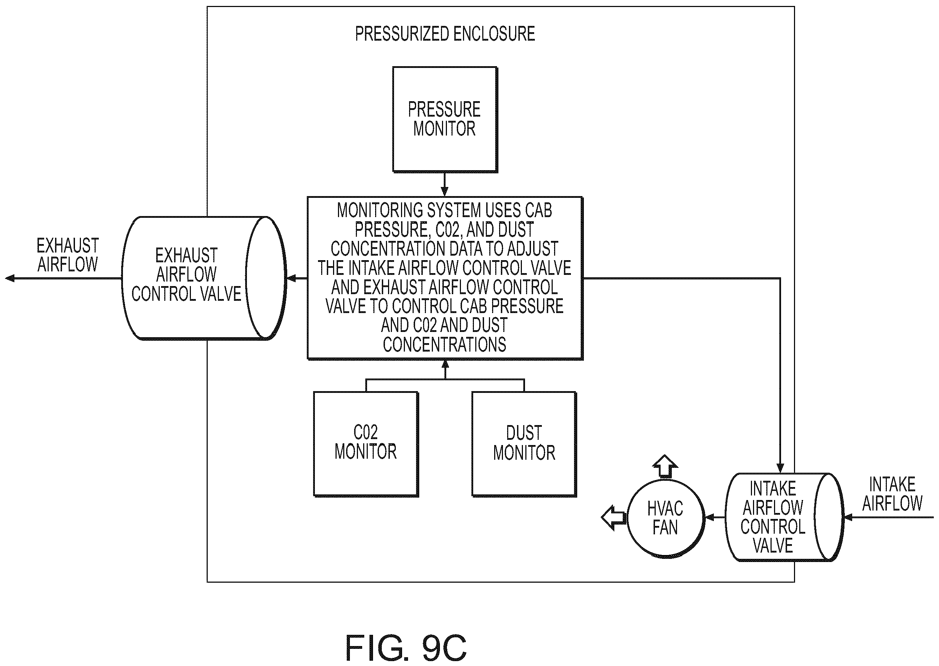

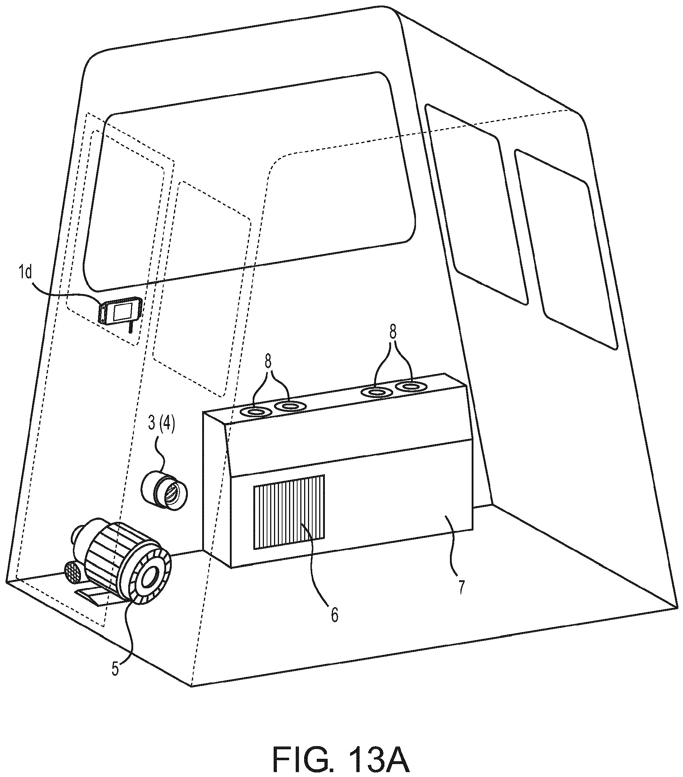

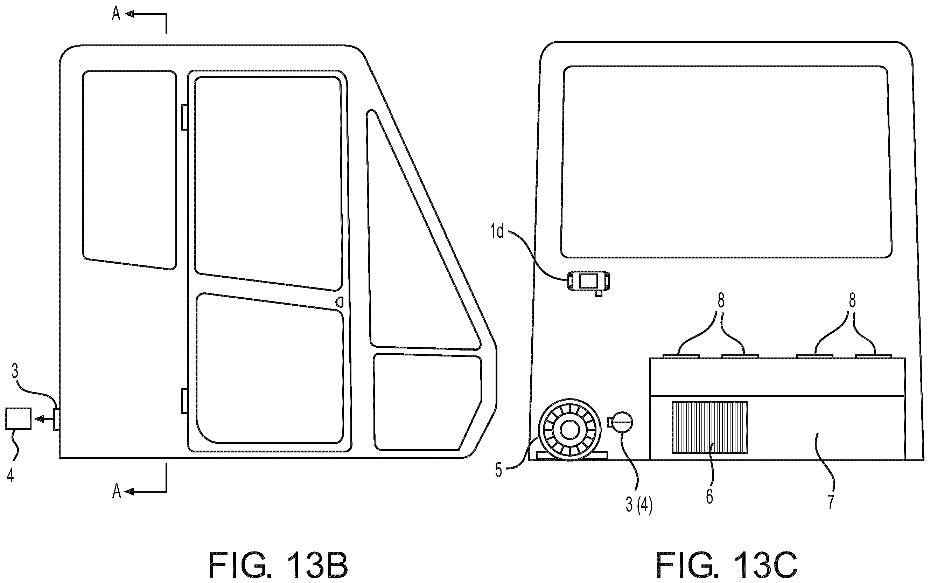

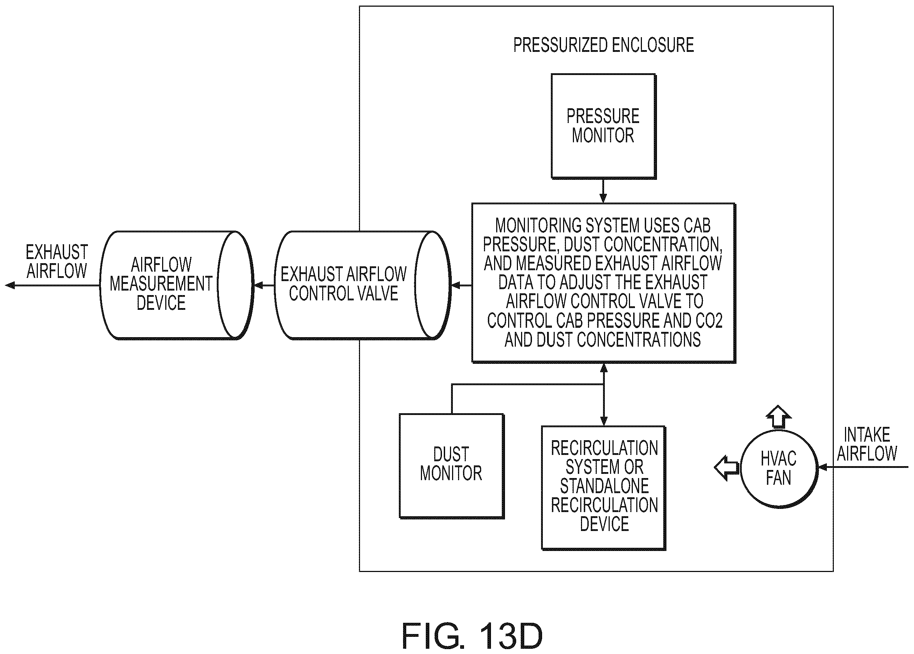

When the sensors are mounted inside the advisor module as shown in Figure 1A, for example, on the circuitry of the advisor module, the processor of the advisor module directly receives the data from the sensors and analyzes that data to determine whether and how to control the other components of the system to manage air quality issues (discussed in detail below). See, for example, Figures 1A, 1B, 2A, 2C, 3A, 3B, 4A, 4B, 5A, 5C, 6A and 6C showing the advisor module 1a that has the pressure sensor included therein; Figures 7A, 7B, 8A and 8B showing the advisor module 1b that has the pressure sensor and the CO₂ sensor included therein; Figures 9A, 9B, 10A, 10B, 11A, 11B, 12A and 12B showing the advisor module 1c that has the pressure sensor, the CO₂ sensor, and the dust sensor included therein; and Figures 13A, 13C, 14A, 14C, 15A, 15C, 16A, 16C and 16D showing the advisor module 1d that has the pressure sensor and the dust sensor included therein.

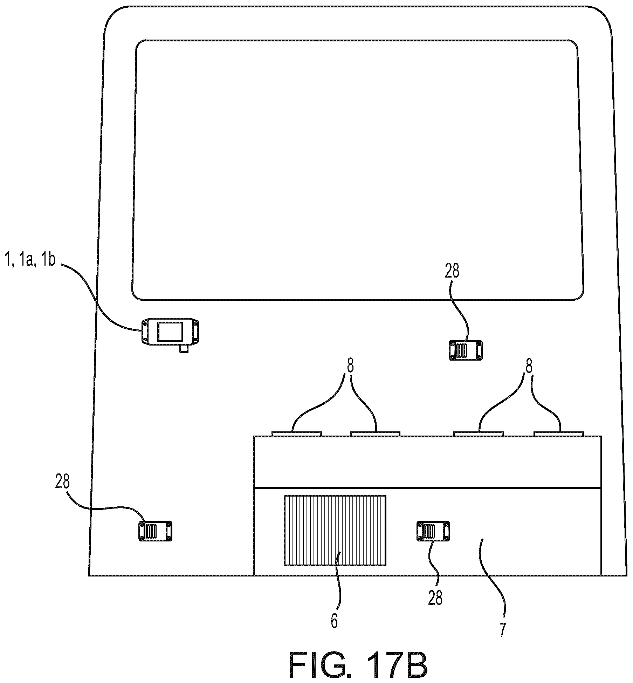

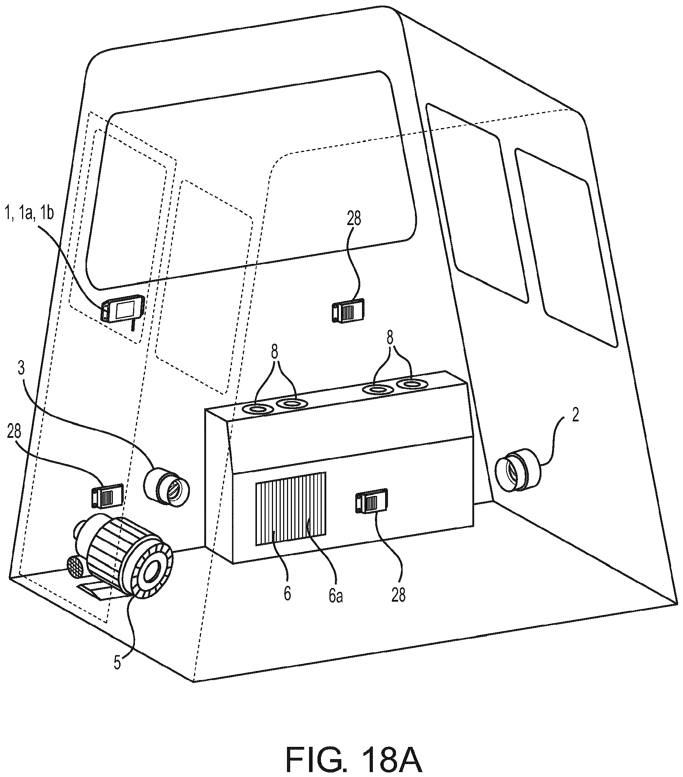

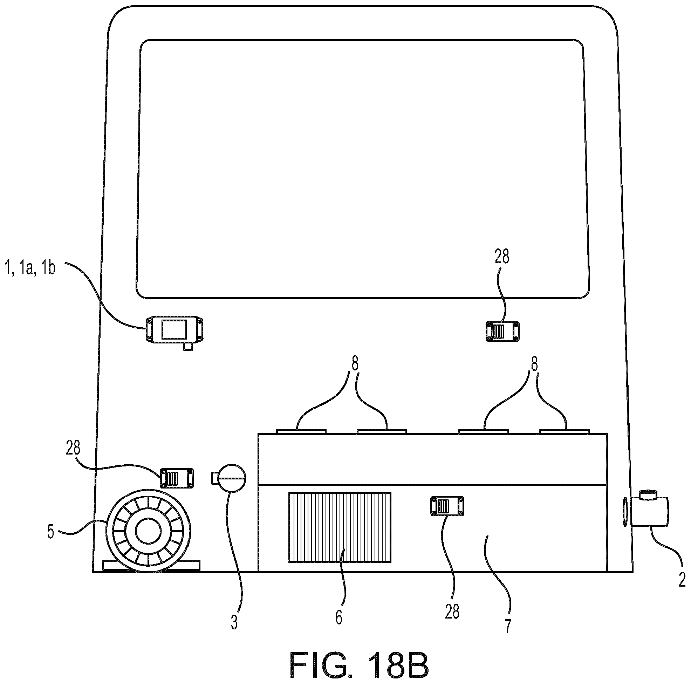

When the sensors are remotely mounted within the enclosure and outside of the advisor module, the processor of the advisor module receives a signal containing the data from the sensors and analyzes that data to determine whether and how to control the other components of the system to manage air quality issues (discussed in detail below). See, for example, Figures 17A, 17B, 18A and 18B showing at least the dust sensor 28 remotely mounted. The dust sensor 28 may be remotely mounted at a variety of mounting locations as shown in Figures 17A, 17B, 18A and 18B. Alternatively, the dust sensor is mounted inside of the advisor module, as described above.

As discussed below in the section for the Description of Various Embodiments of Control System and Control Methods, the advisor module is configured to use the sensor data to monitor CO₂ and other toxic gas concentrations within the cab, respirable dust concentrations, pressure, temperature, and cab air leakage.

### (2) Description of Airflow Control Valves

The air quality monitoring and control system may further include one or a plurality of airflow control valves. The air quality monitoring and control system actively (in a real-time manner) monitors the exhaust air volume and the advisor module controls the airflow control valves to adjust the intake air volume to maintain a minimum of, for example, 25 CFM at the exhaust, which governs air exchange through the cab, thus assuring control of CO₂ dilution. The air quality monitoring and control system can actively monitor the CO₂ level of the cab and, optionally, can use measured CO₂ as a governing variable to control the airflow control valves to adjust air exchange. In particular, the airflow control valves may be controlled by the advisor module to maintain a target CO₂ level below defined thresholds by opening the intake air valve and/or exhaust air valve that governs air exchange through the cab.

The plurality of airflow control valves may include an intake air valve 2 and/or an exhaust air valve 3. As described below in the section for the Description of Various Embodiments of Control System and Control Methods, the system may include both the intake air valve 2 and the exhaust air valve 3, may include only the intake air valve 2, or may include only the exhaust air valve 3. While air valves may be motorized or non-motorized, the intake and exhaust air valves (2, 3) in the present disclosure must be motorized or have an otherwise electronically-generated control mechanism for opening and closing. Thus, a manual valve 30 means a non-motorized valve or a valve not having an otherwise electronically-generated control mechanism for the valve; or, for this purpose, an open orifice through which air flows into or out of the cab. While one or more manual valves (or open orifices) 30 may be present with a cab or enclosure, and the air quality monitoring and control system will accommodate its presence, only controlled valves are part of the current disclosure. The intake air valve 2 may control airflow entering the cab. The exhaust air valve 3 may control airflow exiting the cab, thereby functioning as a pressure and air release valve for the cab. The intake and exhaust air valves (2, 3) may be made of, for example, polylactic acid plastic or injection-molded polypropylene.

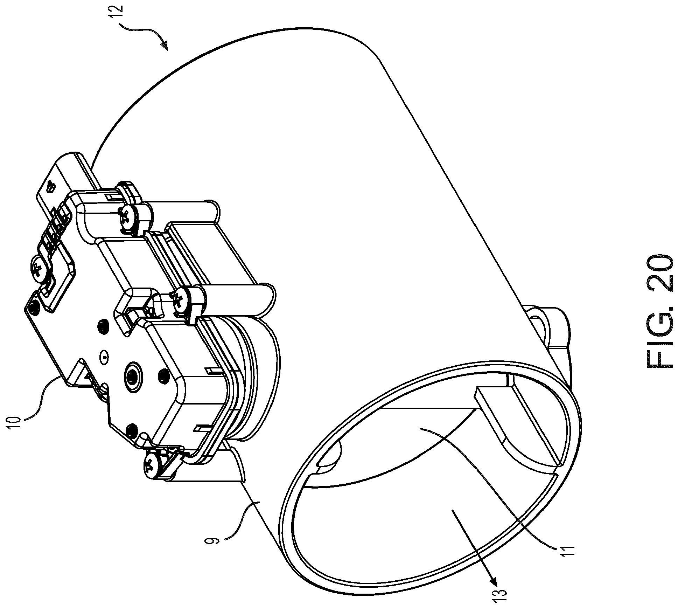

The intake air valve 2 and the exhaust air valve 3 are shown throughout the figures. Although the particular structure and design of the intake air valve 2 and the exhaust air valve 3 are not limited, one non-limiting example of the intake and exhaust air valves (2, 3) is shown as airflow control valve 9 in Figure 20. As shown in Figure 20, the airflow control valve 9 may include a motor (actuator control unit) 10 as well as movable airflow volume control plate 11. Other valve structures that integrate the inventive principles of this disclosure may also be used. For example, the airflow control valve structures disclosed in U.S. Patent No. 10,850,222 may be employed. Because the structure and function of such airflow control valves is well-known in the art, no further discussion is provided herein.

The intake air valve 2 may be located at any one of a variety of locations on the air outlet of the intake air system or further downstream of the intake air system and upstream of the operator cab. As such, the mounting locations of the intake air valve 2 shown in the figures of this disclosure are non-limiting examples. The intake air valve 2 may be wired or WiFi-enabled and controlled directly by the advisor module. Specifically, a unique algorithm may be used by the advisor module to monitor all cab parameters and adjust the flow of fresh air via the intake air valve 2, and adjust cab leakage via the exhaust air valve 3 (discussed below), to maintain optimal operator air quality protection. For example, as discussed below, an exhaust airflow measurement device 4 can measure the volume of the exhaust airflow from the enclosure, at the point of the exhaust airflow valve 3 or at the point of a manual valve (or open orifice) 30, or downstream thereof, and output the data to the advisor module. Then, the advisor module adjusts one or more of the intake and exhaust air valves (2, 3), to produce a predetermined fresh air intake airflow. The intake and exhaust air valves (2, 3) are controlled in this way by the advisor module to direct fresh air to enter the cab, thereby creating sufficient and consistent internal cab pressure while diluting harmful gas (e.g., CO₂) and dust concentrations.

In the operator-occupied cab, intake and exhaust airflows are directly proportional to the level of CO₂ concentration. Real-time measurement of the CO₂ concentration via the sensor(s) discussed above can be used by the advisor module to control the intake air and exhaust airflow of the cab. Exhausting air from the enclosure may be done through a valve-controlled leakage point (i.e., the exhaust air valve 3) in the enclosure or it may be done through a manual valve (or open orifice) 30. The exhaust air valve 3 is automated, receiving command signals output from the advisor module which takes real-time readings from the CO₂ sensor in the cab and uses an algorithm to control and maintain both enclosure pressurization and CO₂ levels by introducing fresh air in metered amounts and allowing CO₂- and dust-contaminated air to be released from the enclosure using the exhaust air valve 700. The CO₂ sensor may be located, for example, at or inside of the advisor module, as discussed above.

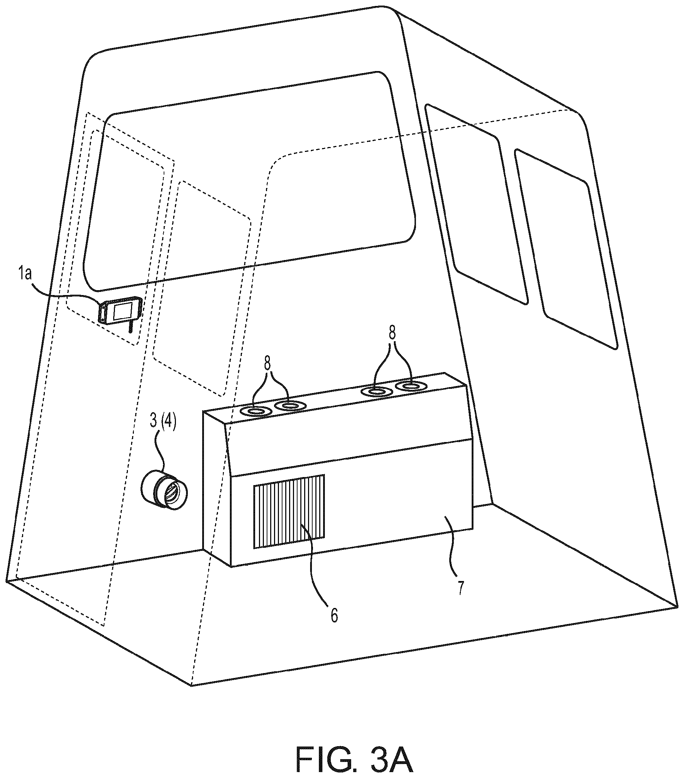

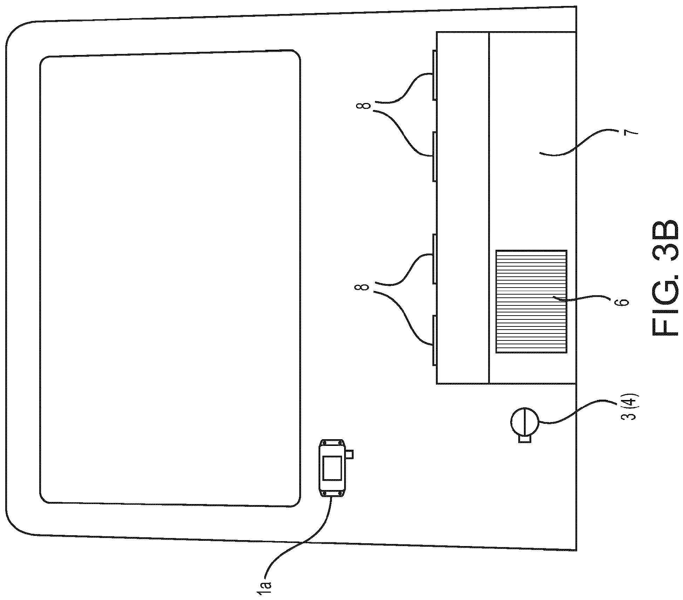

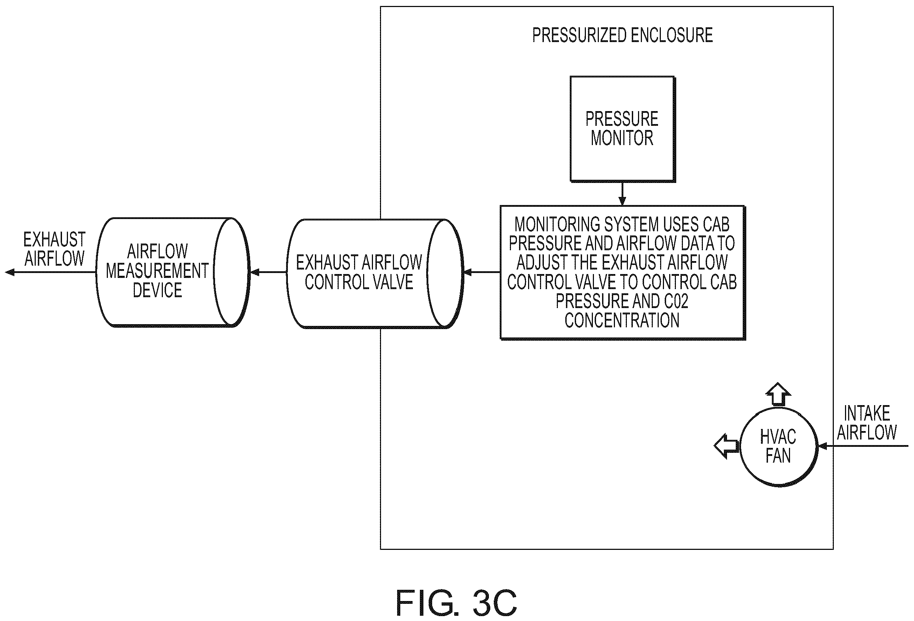

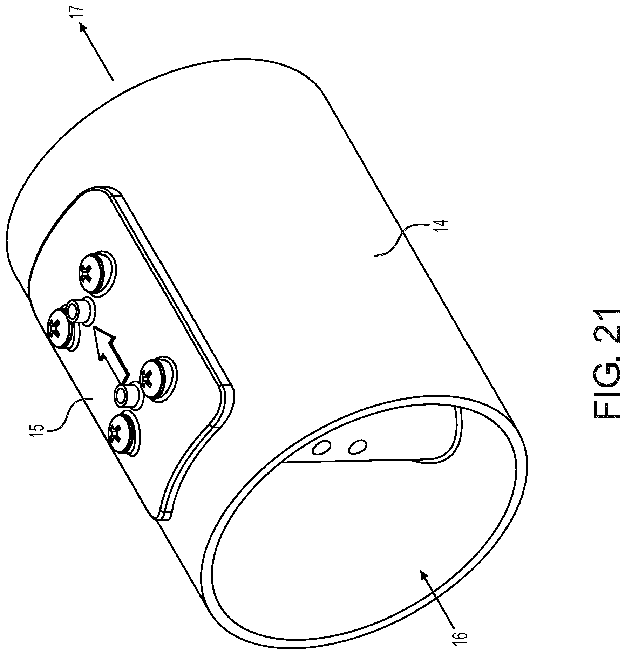

The exhaust air valve 3 is shown, for example, in Figure 3A. As noted above, one non-limiting example of the structure of the exhaust air valve is shown as airflow control valve 9 in Figure 20. The exhaust air valve 3 may have an exhaust airflow measurement device 4 attached to it, integrated with it, or downstream of it with a differential pressure sensor. The differential pressure sensor may be built into the exhaust airflow measurement device 4 that measures the downstream air pressure, and thereby exhaust air volume can be imputed to the advisor module. The exhaust airflow measurement device 4 may also measure humidity and temperature. The exhaust airflow measurement device 4 may be in the form of an air flow straightener (e.g., a laminar flow element) installed immediately downstream of the exhaust air valve or manual valve (or orifice) 30. For instance, one non-limiting example is shown as the exhaust airflow measurement device 14 in Figure 21. The exhaust airflow measurement device 14 includes a conventional data collection component 15 that facilitates the collection of data (e.g., differential pressure data) on the airflow 16 entering the exhaust airflow measurement device 14 and the airflow 17 exiting the exhaust airflow measurement device 14. Methods of airflow measurement using devices such as the exhaust airflow measurement device 14 are well-known in the art and thus no further details are provided herein. The exhaust airflow measurement device 4 is shown as an in-line measurement device.

The exhaust airflow measurement device 4 periodically transmits (e.g., at predetermined intervals) a signal containing the airflow measurement data (e.g., differential pressure data from across the exhaust airflow measurement device 4(14)) to the advisor module to calculate the exhaust airflow (air volume) exiting the operator cab/enclosure. The advisor module may calculate the exhaust air volume exiting the operator cab/enclosure based on the received signal. Alternatively, the received signal may itself indicate the exhaust air volume. The exhaust airflow (air volume) may be calculated or received by the processor of the advisor module in any of the various ways well-known in the art. For example, a mass airflow sensor may be used to provide a signal to the advisor module Based on the calculated exhaust air volume, the advisor module may control the intake and exhaust air valves (2, 3) to ensure that a minimum of 25 CFM of exhaust airflow is maintained and no more exhaust airflow is exhausted than needed to control air quality variables in the cab, thereby minimizing energy draw on the system. For example, in response to the calculated exhaust air volume being greater than 25 CFM, if all air quality variables are in acceptable ranges or at acceptable values, the advisor module transmits control signals to the intake air valve 2 and/or the exhaust air valve 3 to decrease the valve opening(s) until the exhaust airflow is reduced to 25 CFM.

### (3) Description of Dust Sensor

The air quality monitoring and control system may further include the dust sensor described above. The dust sensor may be provided as the dust sensor 29c inside of the advisor module, as shown in Figure 1A. Alternatively, or additionally, the dust sensor may be provided as the dust sensor 28 remotely mounted at any of multiple potential mounting locations as shown in Figures 17A to 18B. The exact structure of the dust sensor is not limited and can take the form of any of various well-known dust sensors. For example, see the dust monitor of U.S. Patent No. 10,850,222, incorporated by reference in its entirety above. The dust sensor provides real-time cab/enclosure gravimetric dust measurements to the advisor module.

### (4) Description of Stand-Alone Recirculation Filtration Device

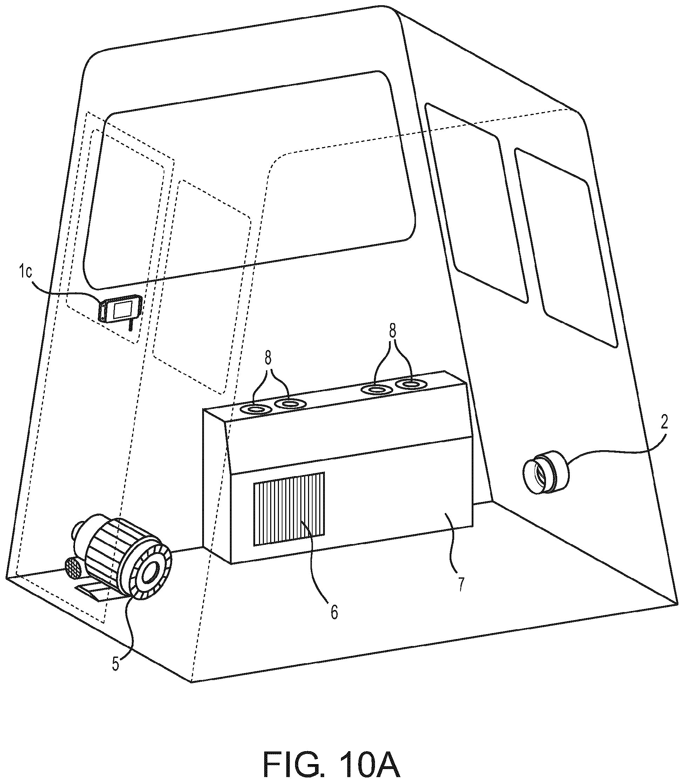

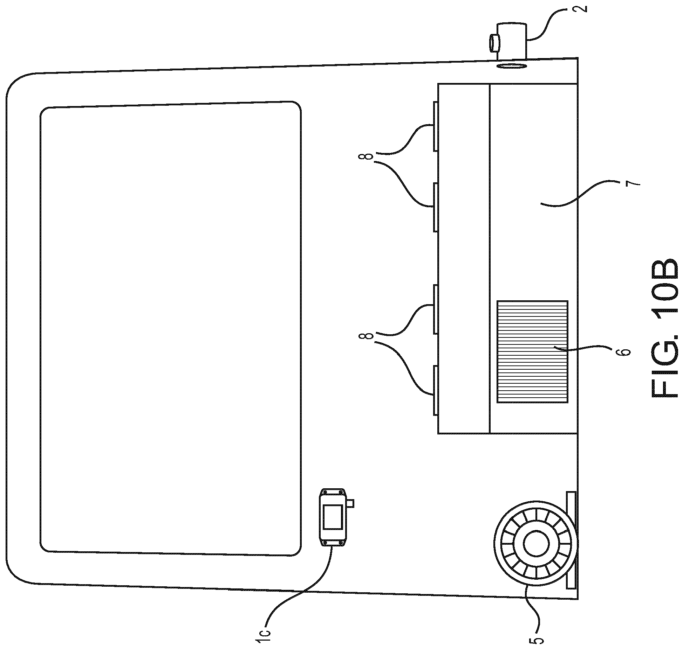

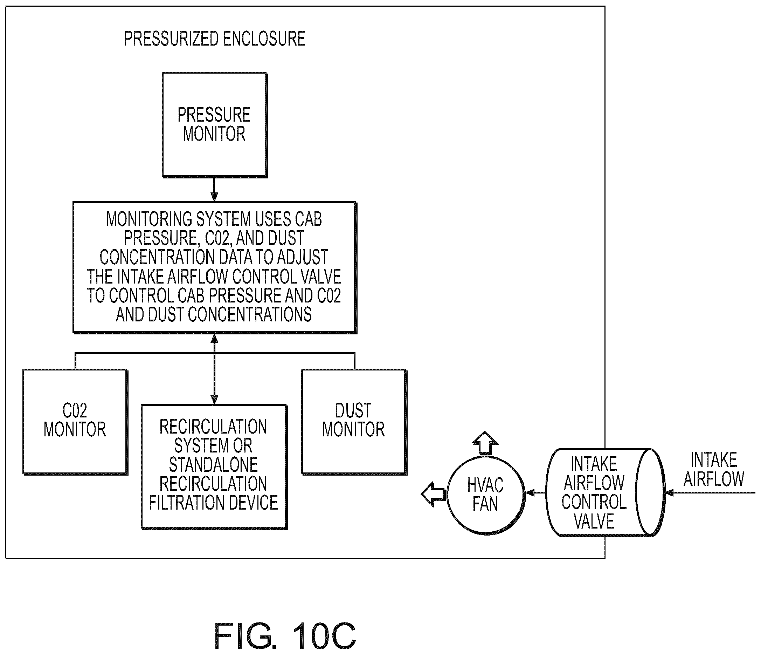

The air quality monitoring and control system may further include a stand-alone recirculation filtration device 5. The stand-alone recirculation filtration device 5 is shown, for example, in Figure 10A. The stand-alone recirculation filtration device 5 works together with the dust sensor and the advisor module to reduce the dust level to be below a predetermined threshold. Specifically, the dust sensor periodically transmits a dust signal to the advisor module indicating the current dust level. When the dust level rises above the predetermined threshold, the advisor module transmits a signal to the stand-alone recirculation filtration device 5 to increase the airflow passing through the recirculation filter of the stand-alone recirculation filtration device 5, thereby rapidly reducing the dust level to below the predetermined threshold.

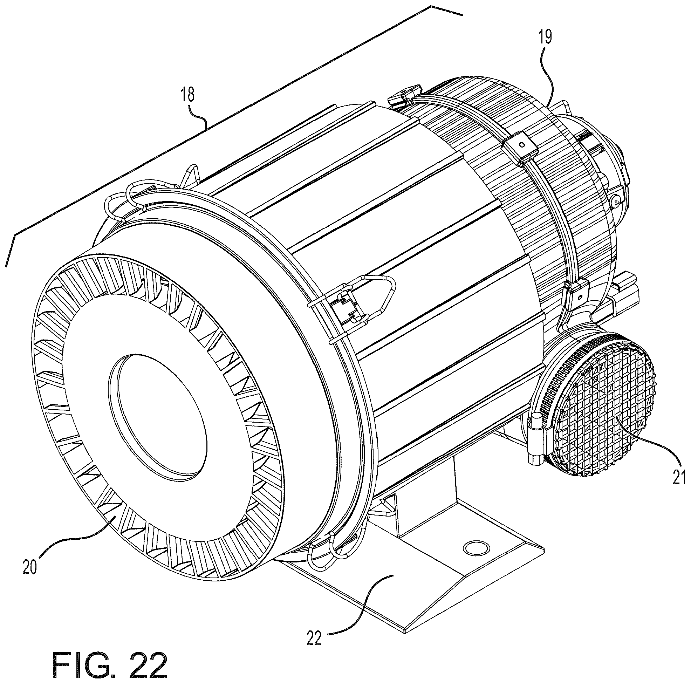

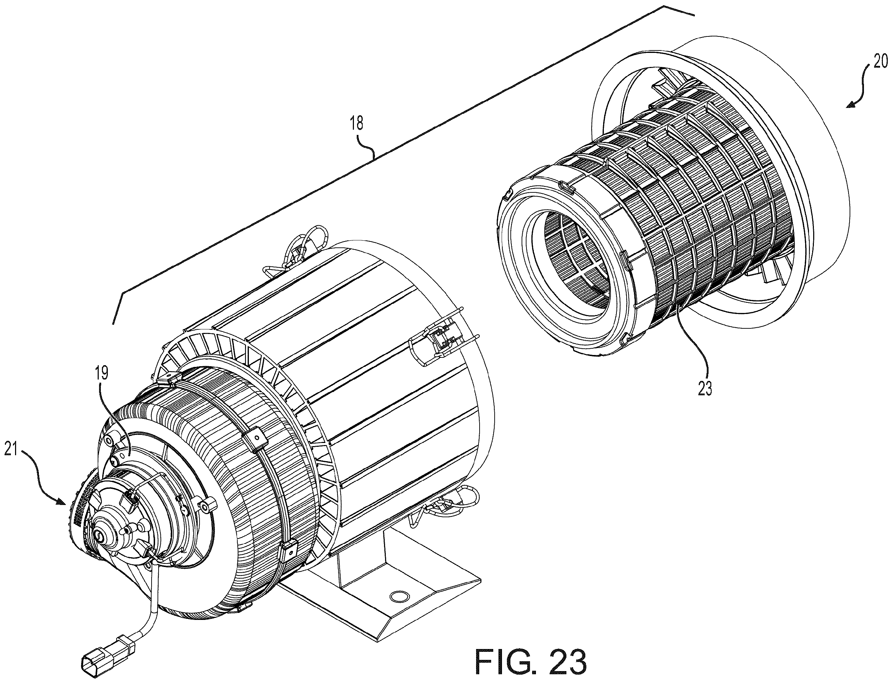

Figures 22 and 23 show non-limiting examples of the structure of the stand-alone recirculation filtration device 5, as stand-alone recirculation filtration device 18. The stand-alone recirculation filtration device 18(5) includes a motorized fan assembly 19, a dirty air inlet 20, a clean air outlet 21, a mounting base 22 and a filter media 23. In a manner partially similar to the self-cleaning air filtration apparatus of U.S. Patent Application No. 17/356,973, incorporated by reference in its entirety above, dirty air is brought into the stand-alone recirculation filtration device 18, particulate matter is filtered by the filter media 23, and the resulting clean air is expelled through the clean air outlet 21.

In addition, to further accelerate the reduction in dust level in the cab enclosure, the advisor module may transmit signals to control the intake and/or exhaust air valves (2, 3) to open further. This control results in an increase in the volume of filtered intake air coming into the enclosure, as well as an increase in the volume of contaminated air being exhausted from the enclosure.

### (5) Description of Various Embodiments of Control System and Control Methods

In view of the above discussion, embodiments of the air quality monitoring and control system, and control methods, are described in further detail below. However, it should be understood that the principles of the disclosure may be applied to methods not explicitly described herein. The methods described show the range in ability of the air quality monitoring and control system to adjust and maintain air quality variables based upon the absence or presence of certain embodiments. While use of a fuller set of embodiments and control methods allows for fuller optimization of air quality monitoring and control, more limited embodiments and control methods may still be effective.

In the embodiment of Figures 1A to 1C, the advisor module (i.e., the monitoring system) uses pressure data received from the pressure sensor (pressure monitor) to adjust the intake air valve 2 to adjust and control the internal pressure of the enclosure. It is assumed that the enclosure experiences air leakage (on an uncontrolled basis), which affects the internal pressure of the enclosure (cab). The advisor module monitors the pressure to ensure a continuous positive pressure within a predetermined pressure range. Specifically, in response to receiving the pressure data from the pressure sensor, the advisor module determines whether the internal pressure of the cab is within the predetermined pressure range. In response to determining that the internal pressure of the cab is below the predetermined pressure range, the advisor module sends a control signal to the intake air valve 2 to increase the intake airflow until the internal pressure of the cab is within the predetermined pressure range.

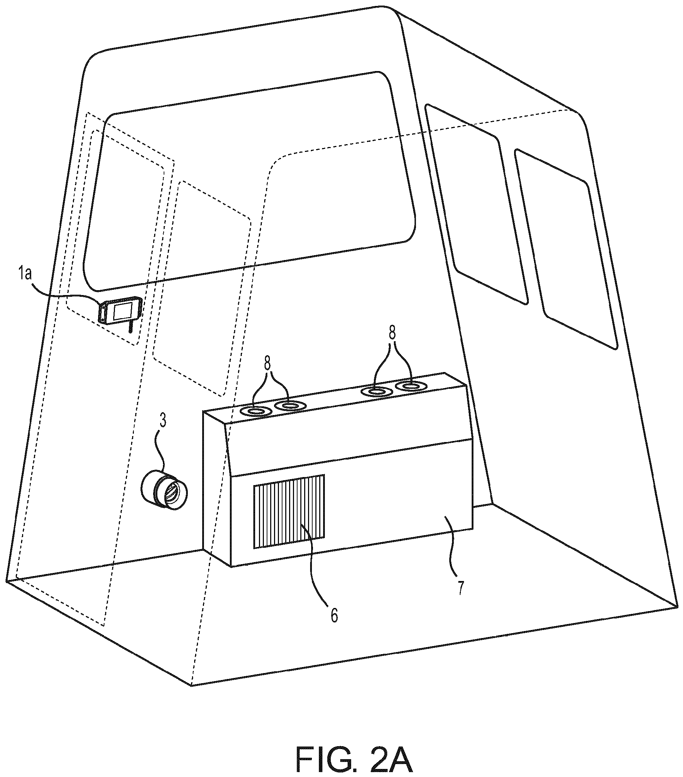

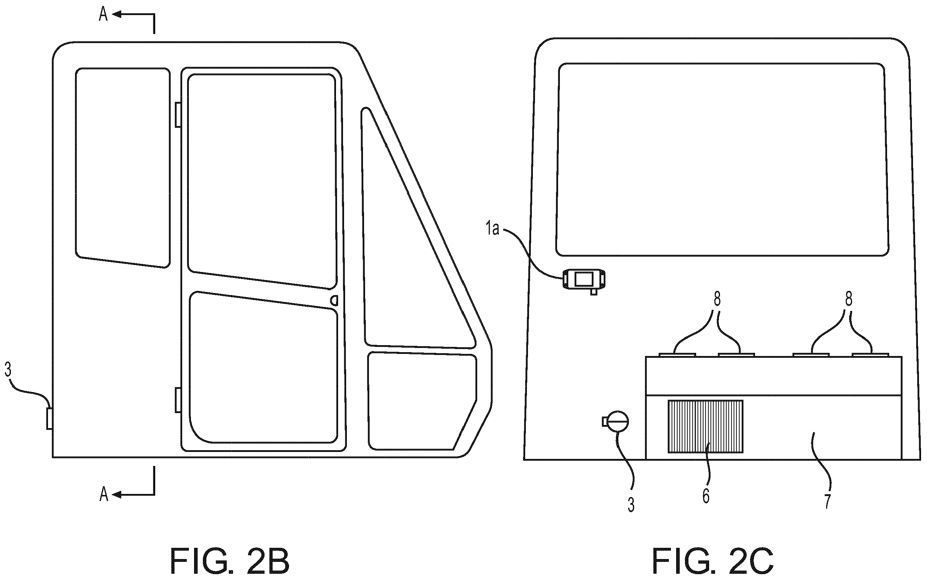

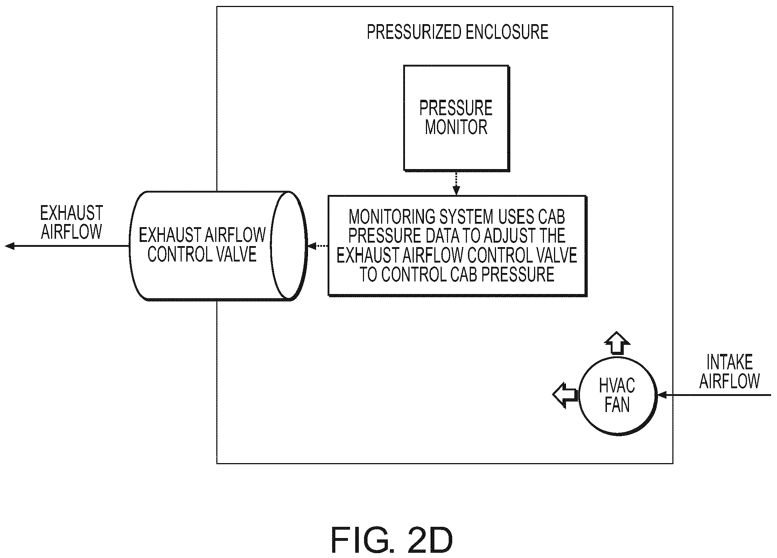

In the embodiment of Figures 2A to 2D, there is no intake air valve 2 provided. Instead, a continuous intake airflow is provided via the HVAC system's fan. In order to control the internal air pressure, the advisor module (i.e., the monitoring system) uses pressure data received from the pressure sensor (pressure monitor) to adjust the exhaust air valve 3 to adjust and control the internal pressure of the enclosure. Specifically, in response to receiving the pressure data from the pressure sensor, the advisor module determines whether the internal pressure of the cab is within the predetermined pressure range. In response to determining that the internal pressure of the cab is above the predetermined pressure range, the advisor module sends a control signal to the exhaust air valve 3 to increase the exhaust airflow until the internal pressure of the cab is within the predetermined pressure range.

The embodiment of Figures 3A to 3C is similar to that of Figures 2A to 2D, except that the exhaust airflow measurement device 4 is included. In this embodiment, the advisor module receives data from one or both of the pressure sensor and the exhaust airflow measurement device 4, and controls the exhaust air valve 3 to ensure the internal pressure of the cab and/or airflow volume is within the predetermined range or at a predetermined level, respectively.

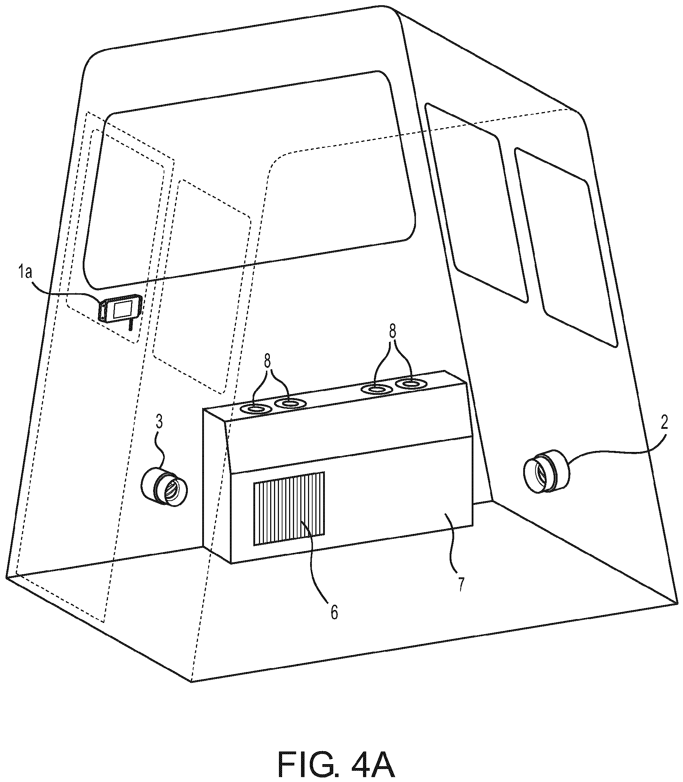

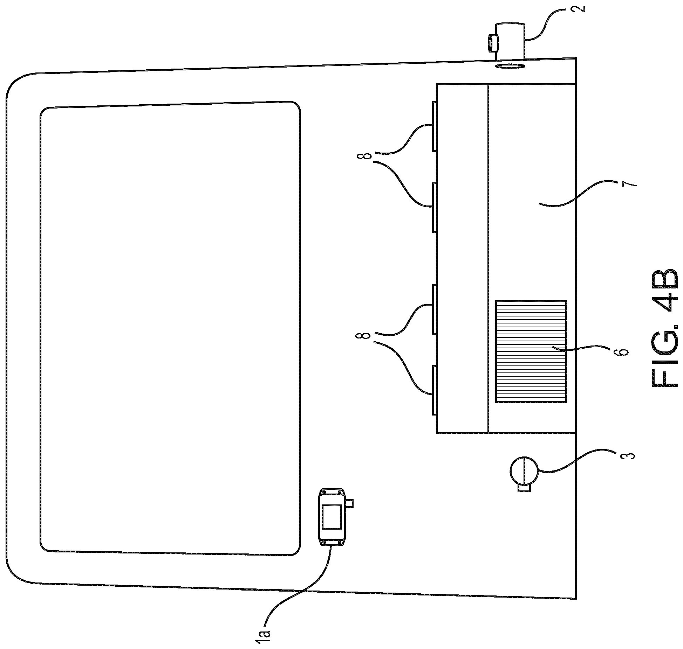

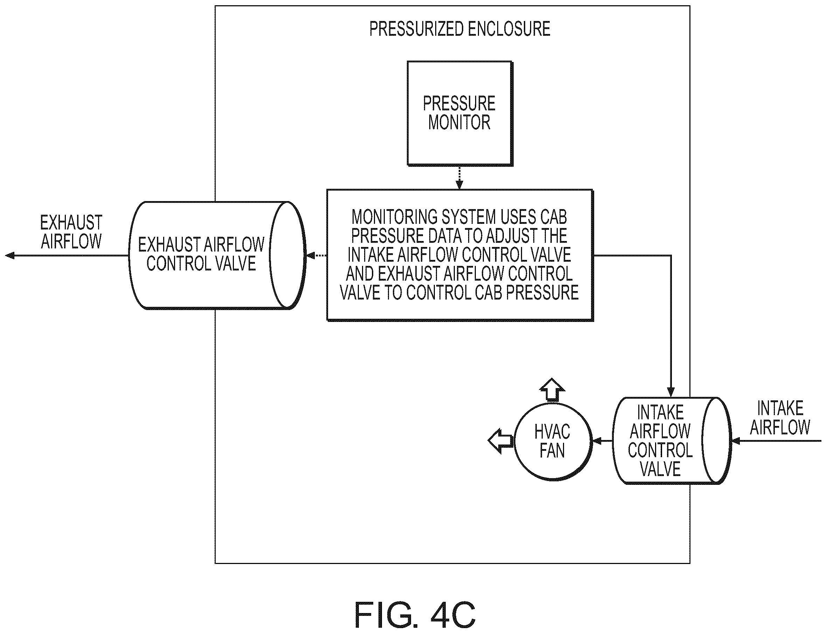

In the embodiment of Figures 4A to 4C, both the intake air valve 2 and the exhaust air valve 3 are provided, but the exhaust airflow measurement device 4 is not provided. The advisor module (i.e., the monitoring system) uses pressure data received from the pressure sensor (pressure monitor) to adjust the intake air valve 2 and/or the exhaust air valve 3 to adjust and control the internal pressure of the enclosure. For example, in response to determining that the internal pressure of the cab is below the predetermined pressure range, the advisor module sends a control signal to the intake air valve 2 to increase the intake airflow until the internal pressure of the cab is within the predetermined pressure range. And in response to determining that the internal pressure of the cab is above the predetermined pressure range, the advisor module sends a control signal to the exhaust air valve 3 to increase the exhaust airflow until the internal pressure of the cab is within the predetermined pressure range.

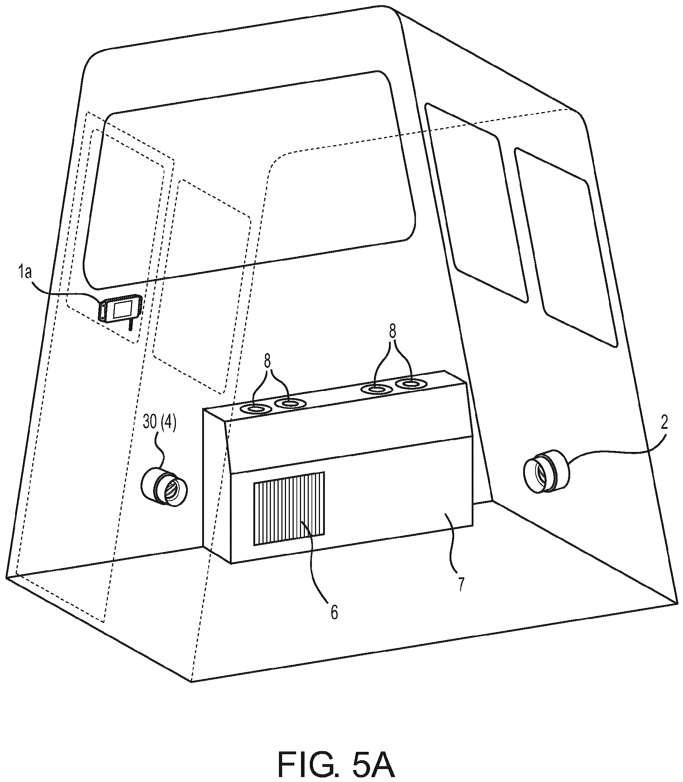

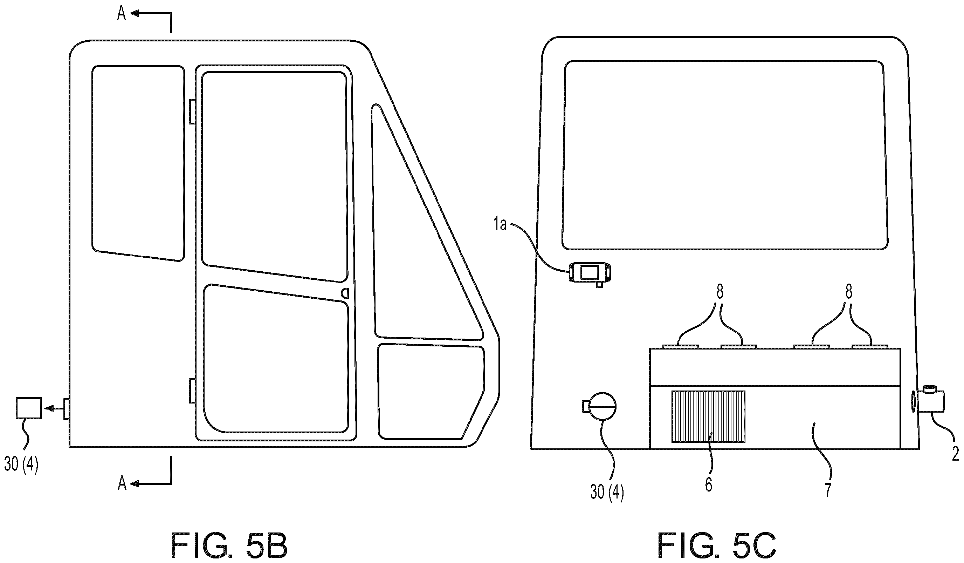

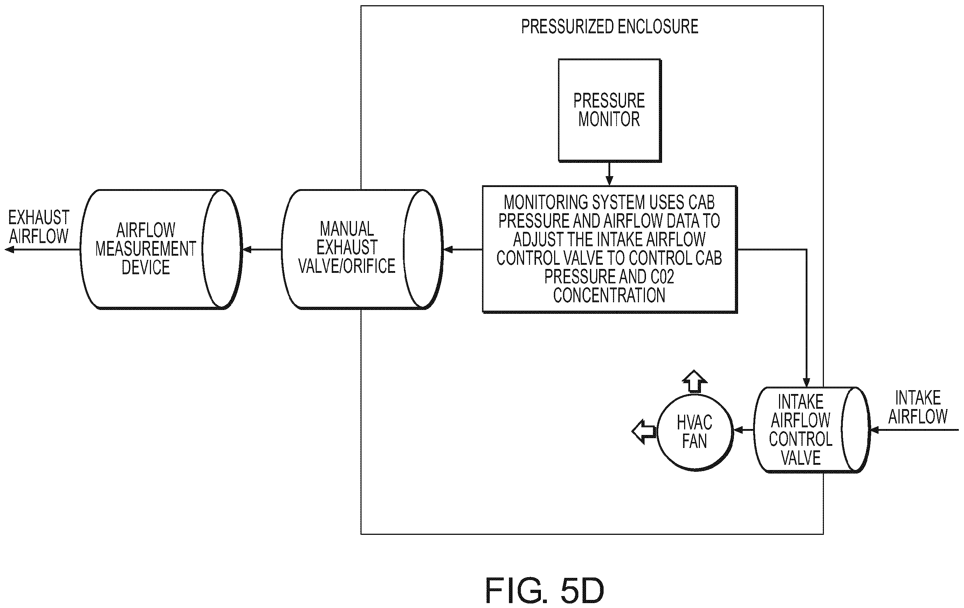

In the embodiment of Figures 5A to 5D, the intake air valve 2 and the exhaust airflow measurement device 4 are provided, but the exhaust air valve 3 is not provided. Rather, a manual exhaust valve (or orifice) 30 is present, through which airflow is not controlled, but can be measured by the exhaust airflow measurement device 4. Thus, the advisor module receives data from one or both of the pressure sensor and the exhaust airflow measurement device 4 and controls the intake air valve 2 to ensure the internal pressure of the cab and/or the airflow volume is within the predetermined range or at a predetermined level, respectively. In response to determining that the internal environment is not at the respective predetermined level based on the received data, the advisor module sends a control signal to the intake air valve 2 to adjust the intake airflow until the predetermined range and/or level is met.

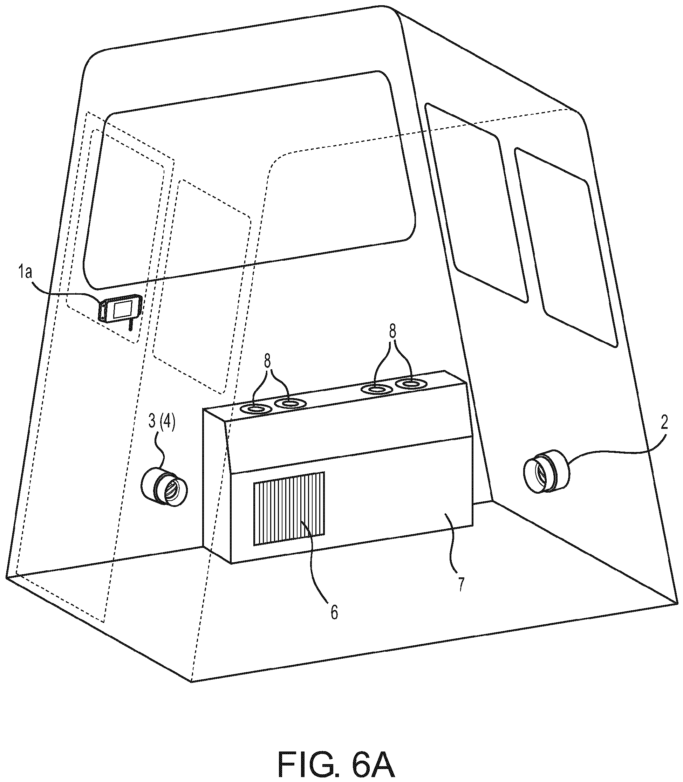

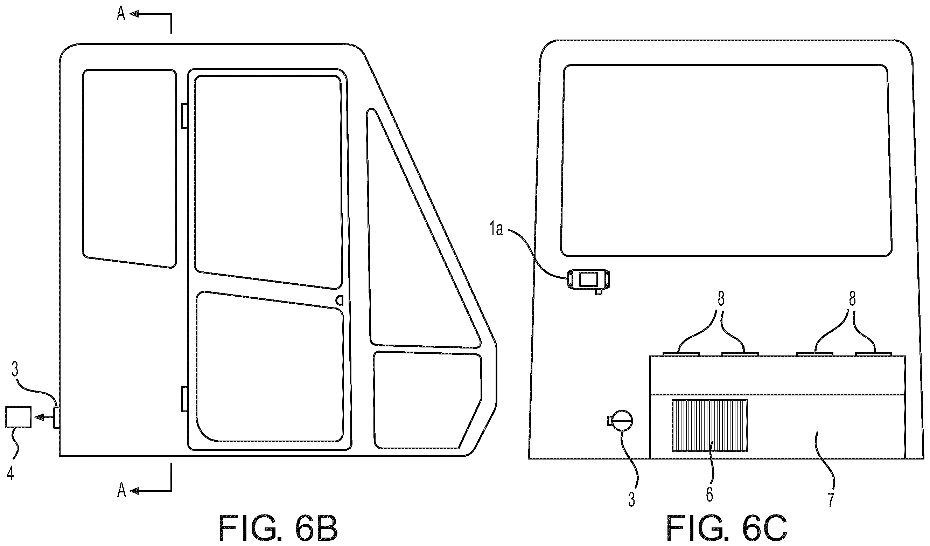

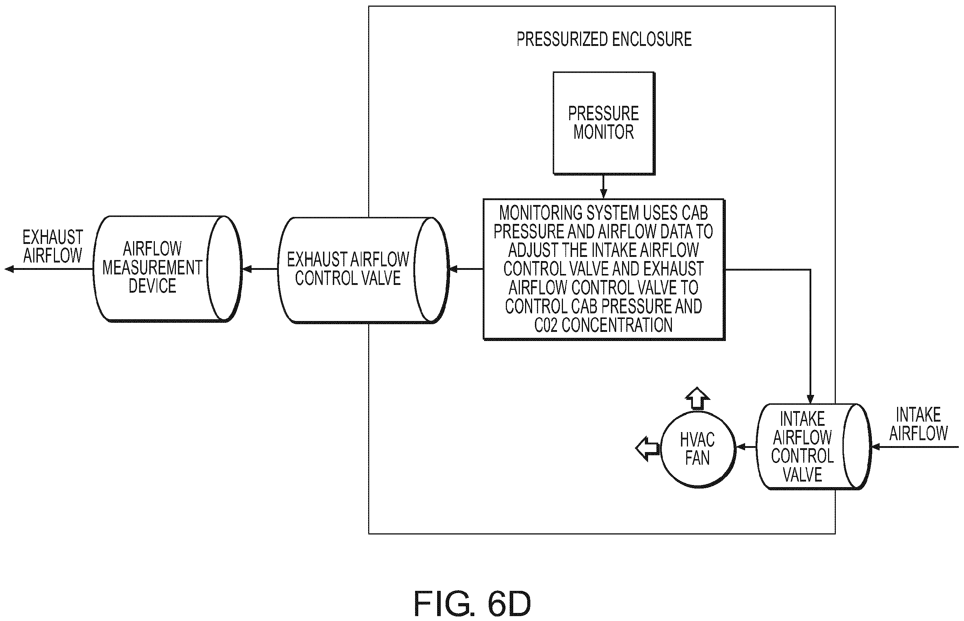

In the embodiment of Figures 6A to 6D, the intake air valve 2, the exhaust air valve 3 and the exhaust airflow measurement device 4 are all provided. In the above-described manner, the advisor module receives data from one or both of the pressure sensor and the exhaust airflow measurement device 4 and controls the intake air valve 2 and the exhaust air valve 3 to ensure the internal environment of the cab is within the predetermined range and/or at the predetermined level.

In the embodiment of Figures 7A to 7C, there is no intake air valve 2 provided. Instead, a continuous intake airflow is provided via the HVAC system's fan. However, unlike the above-discussed permutations, the CO₂ sensor is included in addition to the pressure sensor. The advisor module uses pressure data received from the pressure sensor as well as CO₂ data from the CO₂ sensor to adjust the exhaust air valve 3 as a means to adjust and control the internal pressure of the enclosure as well the CO₂ level. In response to determining that the internal pressure of the cab is above the predetermined pressure range and/or that the internal CO₂ level of the cab is above a predetermined CO₂ level, the advisor module sends a control signal to the exhaust air valve 3 to increase the exhaust airflow, which will allow additional intake air to flow in through the HVAC system, until the internal pressure of the cab is within the predetermined pressure range and/or until the internal CO₂ level of the cab is below the predetermined CO₂ level. This embodiment provides control of the CO₂ level by maintaining positive pressure while introducing oxygen-rich ambient air and also exhausting a controlled volume of oxygen-depleted air from the enclosure.

The embodiment of Figures 8A to 8C is similar to that of Figures 7A to 7C, except that the intake air valve 2 is included. Thus, as described in the preceding paragraph for Figures 7A to 7C, the advisor module of Figures 8A to 8C uses pressure data received from the pressure sensor as well as CO₂ data from the CO₂ sensor to adjust the intake air valve 2 and/or the exhaust air valve 3 as a means to adjust and control the internal pressure of the enclosure as well the CO₂ level to reach the predetermined levels.

In the embodiment of Figures 9A to 9C, the intake air valve 2 and exhaust air valve 3 are included. Also, the dust sensor is provided in addition to the pressure sensor and the CO₂ sensor. Therefore, the advisor module monitors the pressure level, the CO₂ level and the dust level inside the enclosure. Specifically, the advisor module receives the pressure data from the pressure sensor, the CO₂ data from the CO₂ sensor, and the dust data from the dust sensor. Based on this received data, in response to determining that the internal environment of the cab is not at one or more of the predetermined levels, or within one or more of the predetermined ranges, the advisor module sends a control signal to the intake air valve 2 and/or exhaust air valve 3 to bring the environment to the predetermined level(s) and/or within the predetermined range(s).

In the embodiment of Figures 10A to 10C, only the intake air valve 2 is provided to control airflow. However, unlike the above-described embodiments, this embodiment includes the stand-alone recirculation filtration device 5. The advisor module monitors the pressure level from the pressure sensor, the CO₂ level from the CO₂ sensor and the dust level from the dust sensor. Based on this received data, in response to determining that the internal environment of the cab is not at one or more of the predetermined levels, or within one or more of the predetermined ranges, the advisor module sends a control signal to the intake air valve 2 to bring the environment to the predetermined level(s) and/or within the predetermined range(s). In addition, with the provision of the stand-alone recirculation filtration device 5, the dust level can be further controlled and improved. Specifically, in response to determining that the dust-level data received from the dust sensor indicates that the dust is above the predetermined level, the advisor module sends a control signal to the stand-alone recirculation filtration device 5 to activate (turn on) the stand-alone recirculation filtration device 5. The stand-alone recirculation filtration device 5 further reduces the dust level in the enclosure by filtering the air. Alternatively, the advisor module could send a control signal to the HVAC (or integrated) recirculation system to activate in lieu of a stand-alone recirculation filtration device, having the same effect of further reducing the dust level in the enclosure by increasing recirculated, filtered air.

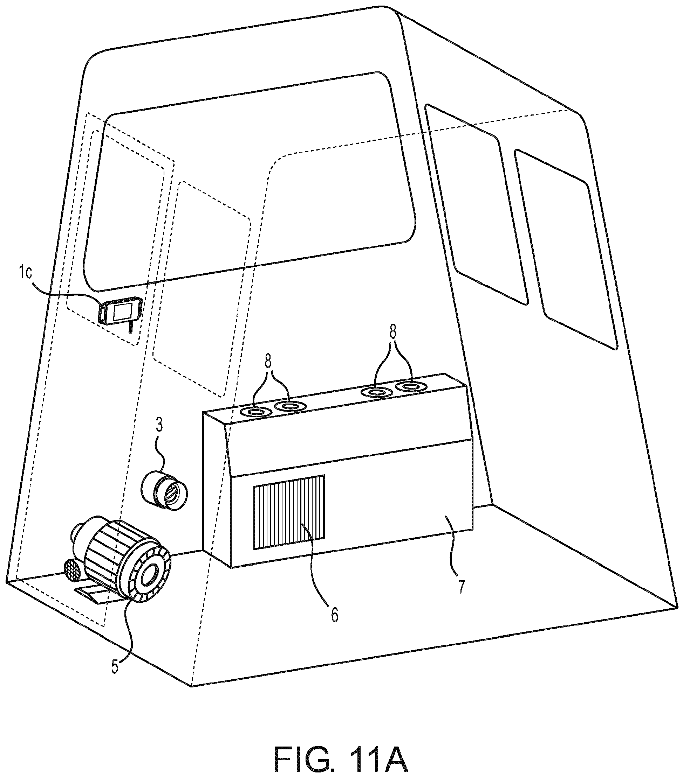

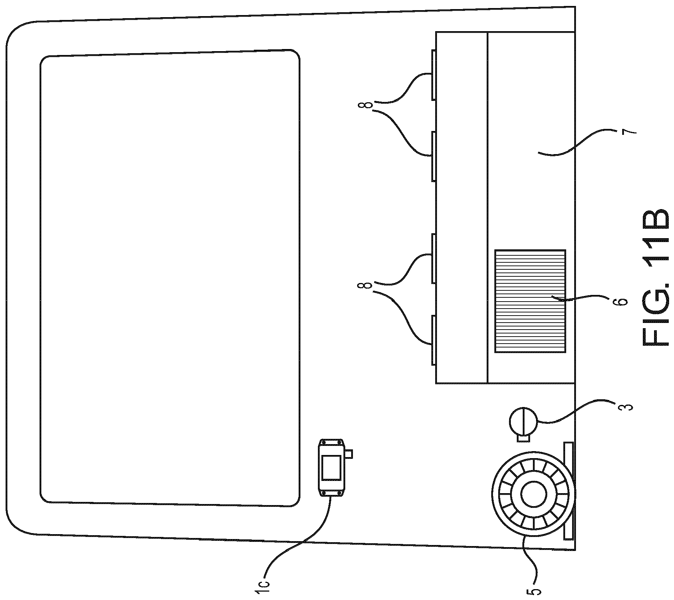

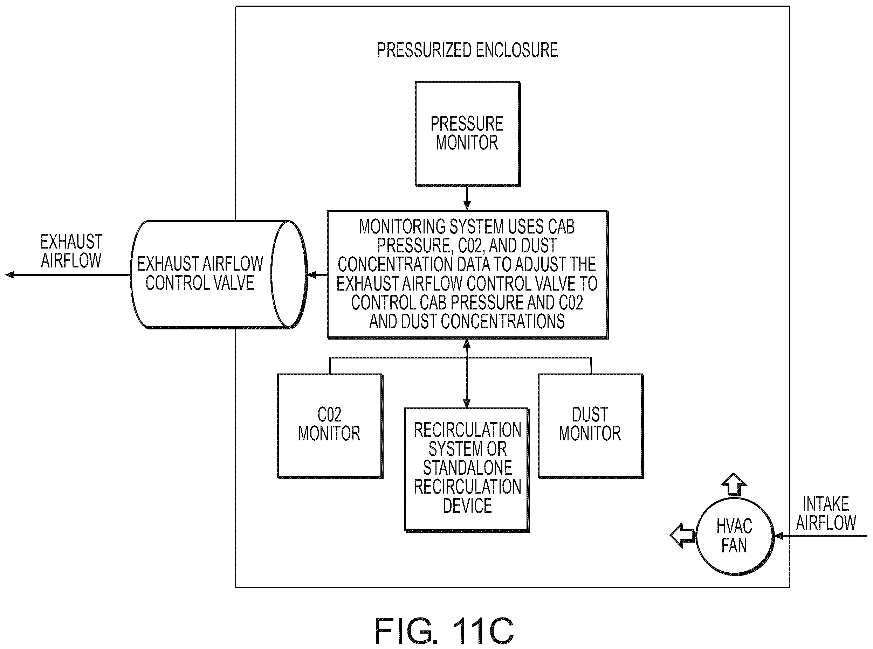

The embodiment of Figures 11A to 11C is similar to that of Figures 10A to 10C, except that exhaust air valve 3 is provided and the intake air valve 2 is not provided. Thus, the advisor module controls the air quality of the enclosure in the same manner as in Figures 10A to 10C, except that the control signal is sent to the exhaust air valve 3 instead of the intake air valve 2. The control signal to activate the stand-alone recirculation filtration device or HVAC (or integrated) recirculation system to reduce dust is the same as that of Figures 10A to 10C.

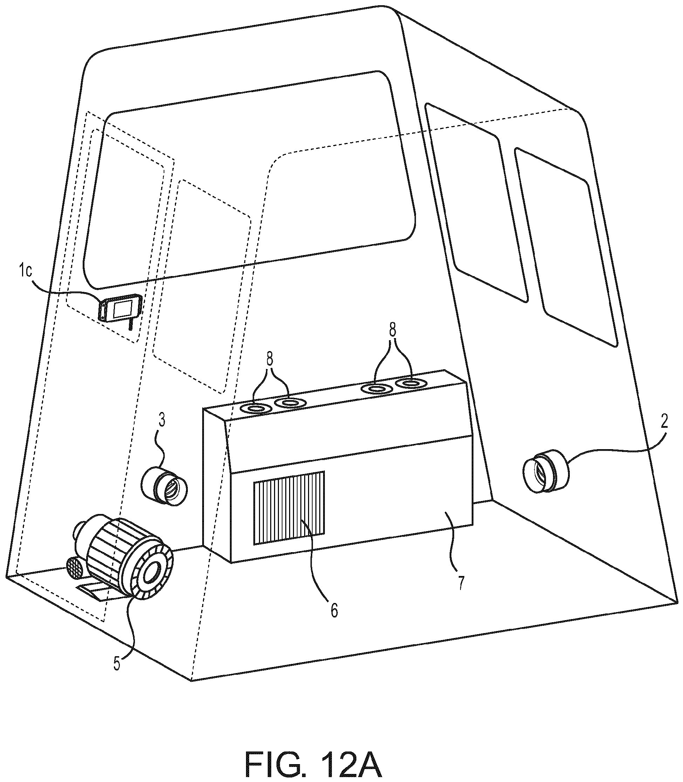

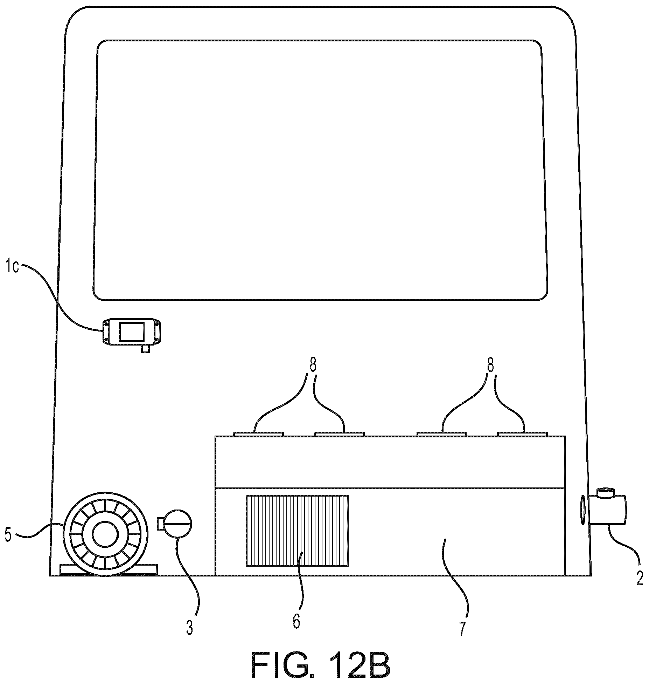

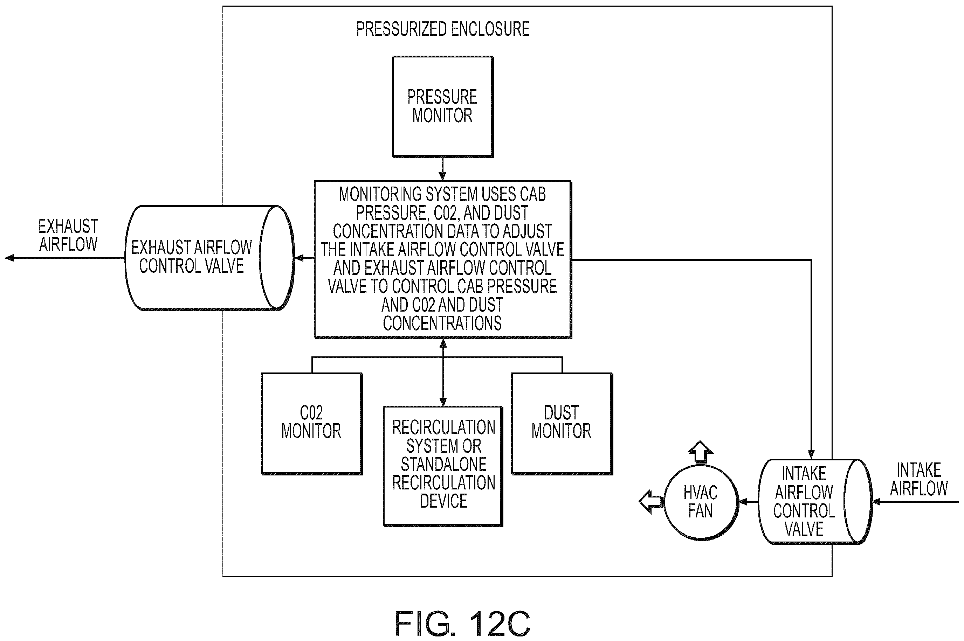

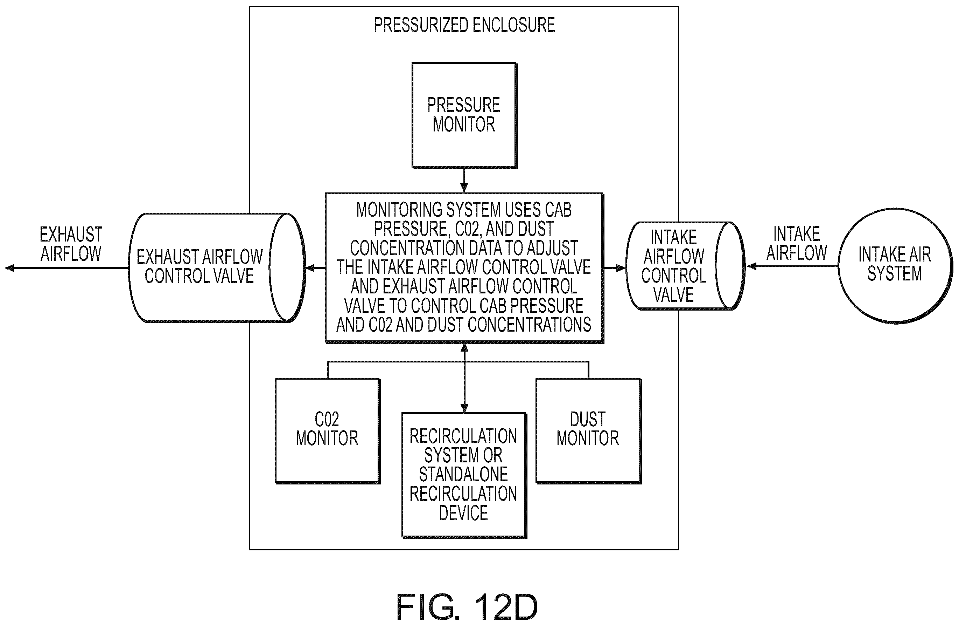

The embodiment of Figures 12A to 12C is a combination of the embodiments of Figures 10A to 10C and Figures 11A to 11C. In particular, the exhaust air valve 3 and the intake air valve 2 are provided. Thus, based on the data received from the multiple sensors, in response to determining that the internal environment of the cab is not at one or more of the predetermined levels, or within one or more of the predetermined ranges, the advisor module sends a control signal to the intake air valve 2 and/or the exhaust air valve 3 to bring the environment to the predetermined level(s) and/or within the predetermined range(s). In addition, in response to determining that the dust level data received from the dust sensor indicates that the dust is above the predetermined level, the advisor module sends a control signal to the HVAC (or integrated) recirculation system or stand-alone recirculation filtration device 5 to activate (turn on) recirculation. Figure 12D is a variant in which an HVAC is not present and an intake air system (only) is used.

In the embodiment of Figures 13A to 13D, the CO₂ sensor and the intake air valve 2 are not provided. Thus, the advisor module receives data from the pressure sensor, the dust sensor, and the exhaust airflow measurement device 4 and sends signals to the exhaust air valve 3 and/or the stand-alone recirculation filtration device 5 to bring the internal environment to the predetermined levels and/or within the predetermined range(s).

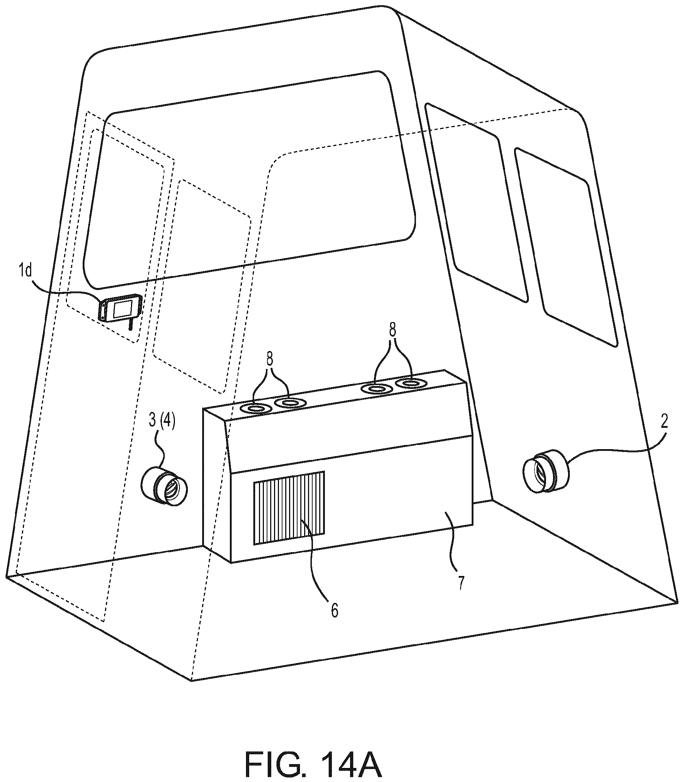

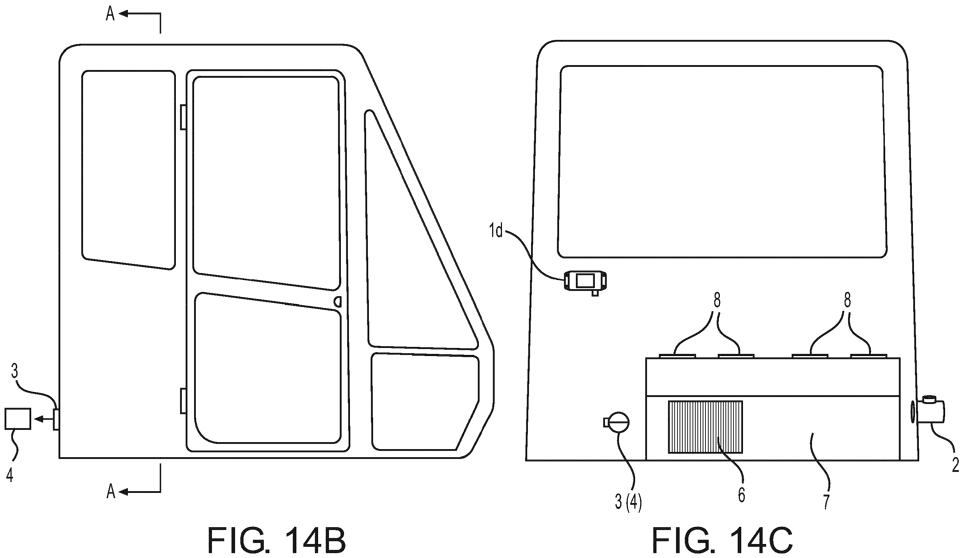

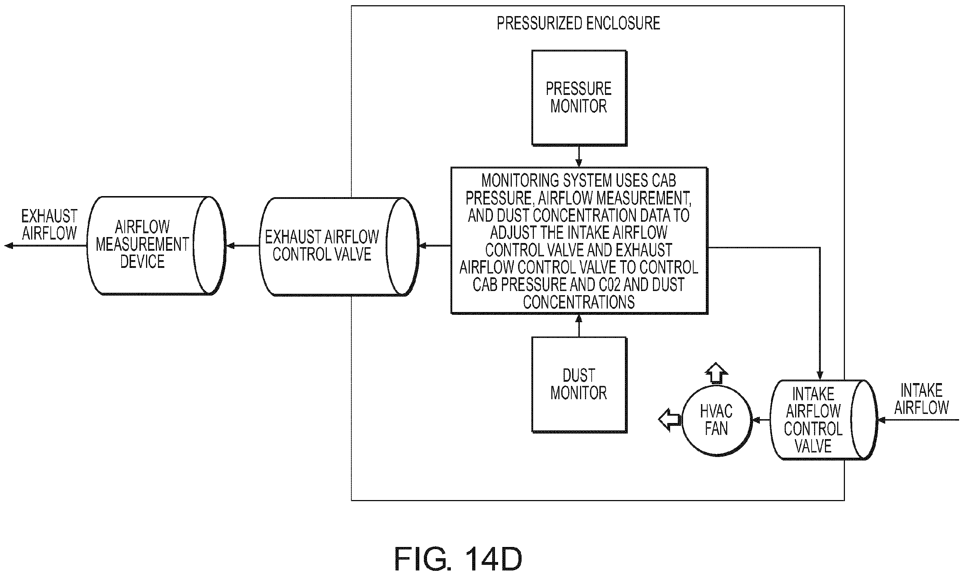

In the embodiment of Figures 14A to 14D, the advisor module receives data from the exhaust airflow measurement device 4, the dust sensor and the pressure sensor. In response to determining that the internal environment is not at one or more of the predetermined levels, or within one or more of the predetermined ranges, the advisor module transmits a control signal to the intake air valve 2 and/or the exhaust valve 3 to bring the internal environment to the predetermined levels and/or within the predetermined range(s).

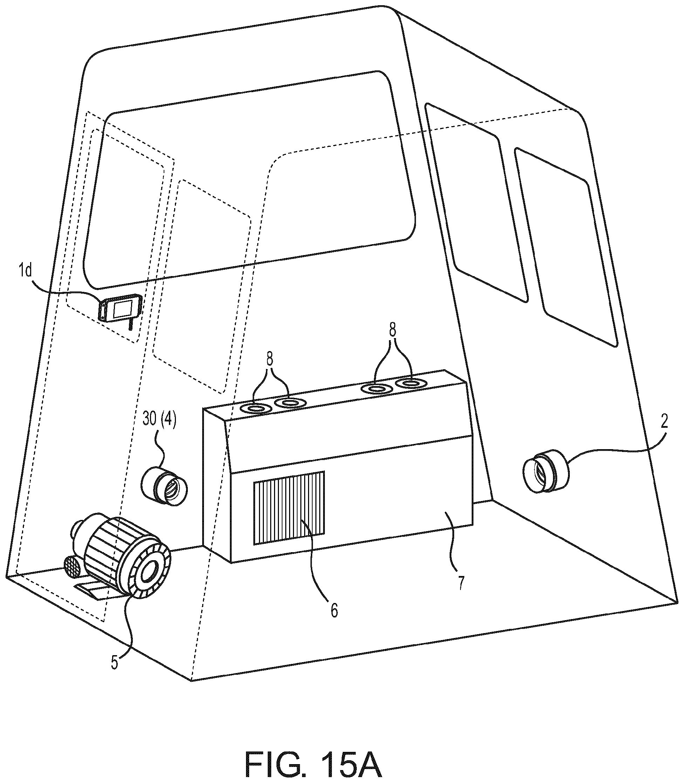

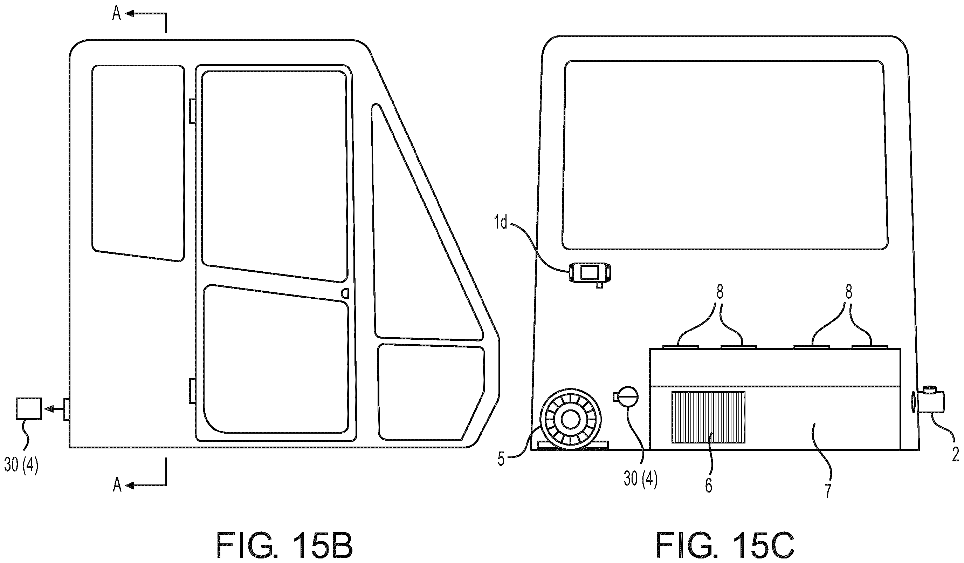

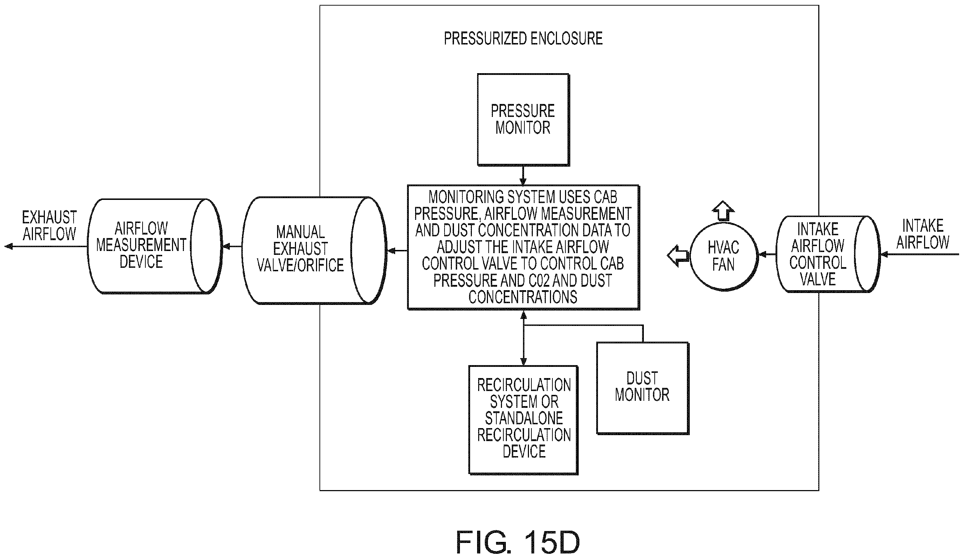

The embodiment of Figures 15A to 15D is similar to that of Figures 14A to 14D, except that the stand-alone recirculation filtration device 5 is included and the exhaust air valve 3 is not included. Rather, a manual exhaust valve (or orifice) 30 is present, through which airflow is not controlled, but can be measured by the exhaust airflow measurement device 4. Therefore, the advisor module receives data from the exhaust airflow measurement device 4, the dust sensor and the pressure sensor. In response to determining that the internal environment is not at one or more of the predetermined levels, or within one or more of the predetermined ranges, the advisor module transmits a control signal to the intake air valve 2 and/or the stand-alone recirculation filtration device 5 to bring the internal environment to the predetermined levels and/or within the predetermined range(s).

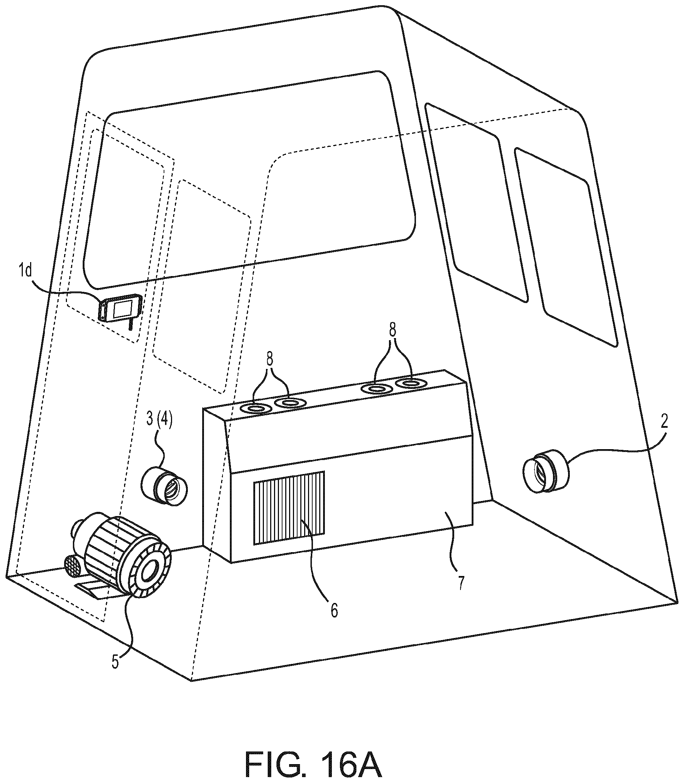

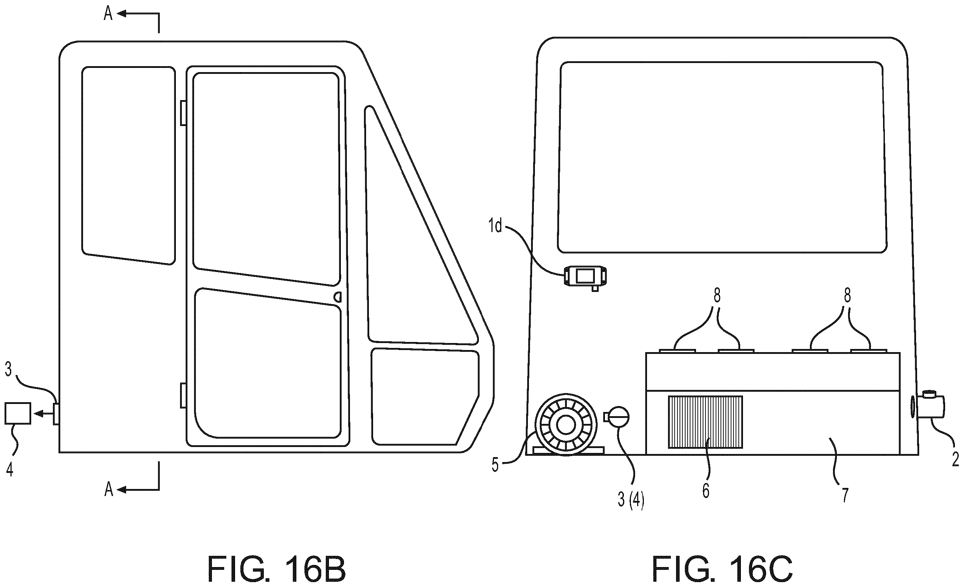

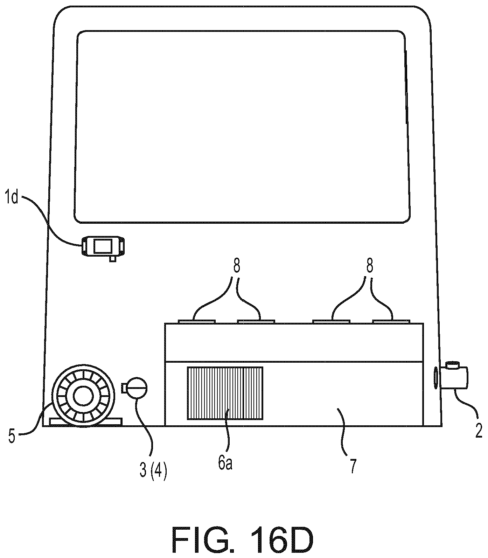

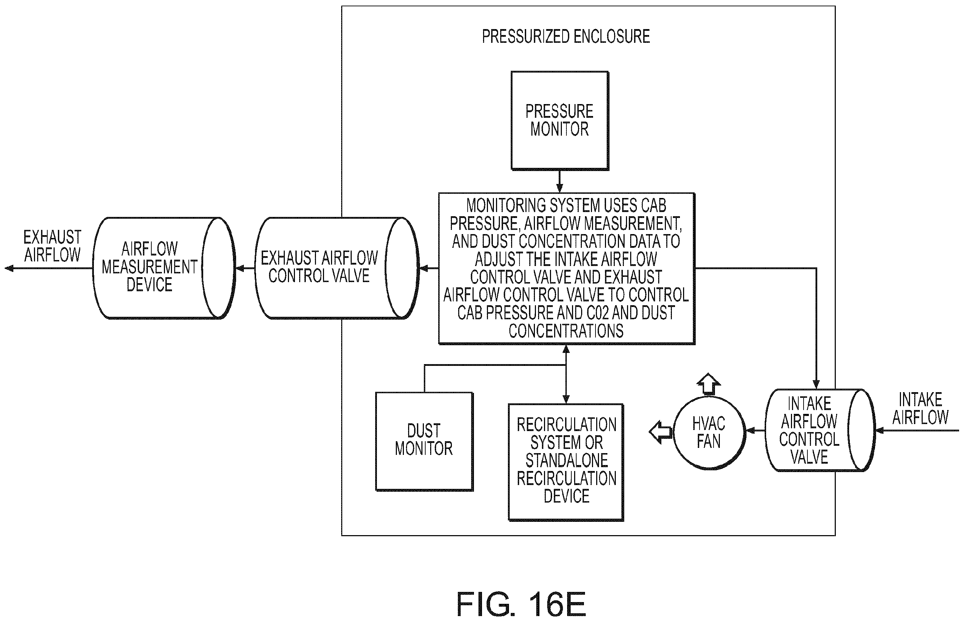

The embodiment of Figures 16A to 16E is similar to that of Figures 15A to 15D, except that the exhaust air valve 3 is included. Therefore, the advisor module receives data from the exhaust airflow measurement device 4, the dust sensor and the pressure sensor. In response to determining that the internal environment is not at one or more of the predetermined levels, or within one or more of the predetermined ranges, the advisor module transmits a control signal to the intake air valve 2, the exhaust air valve 3 and/or the stand-alone recirculation filtration device 5 to bring the internal environment to the predetermined levels and/or within the predetermined range(s).

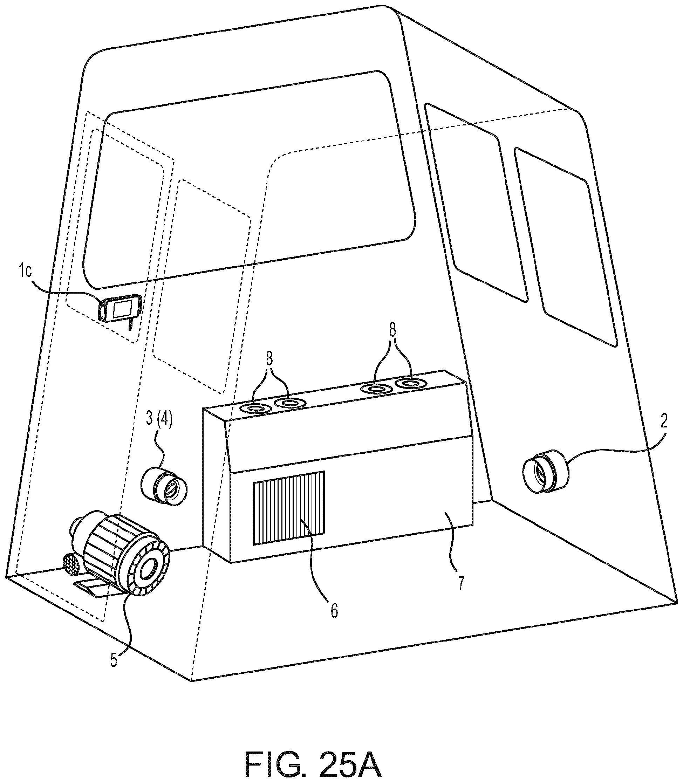

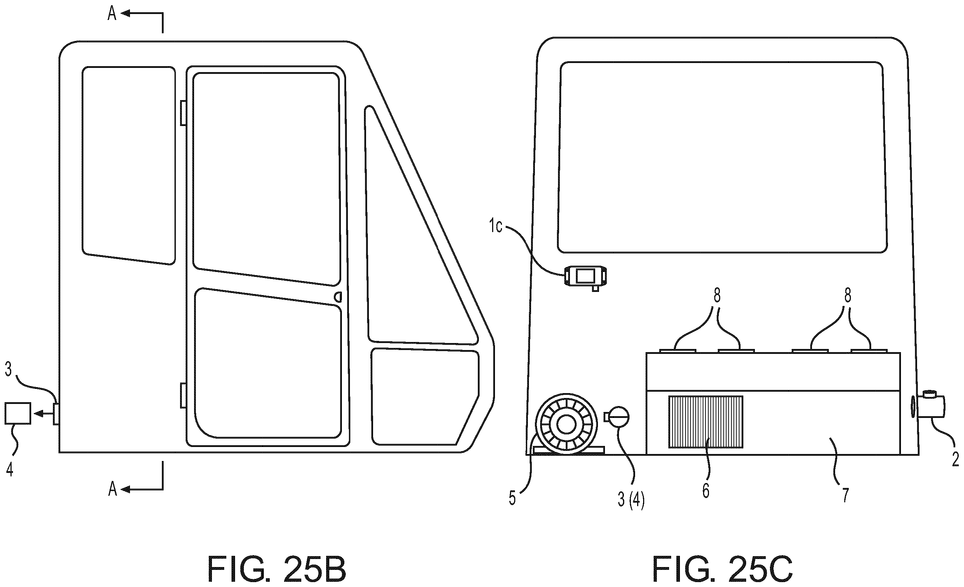

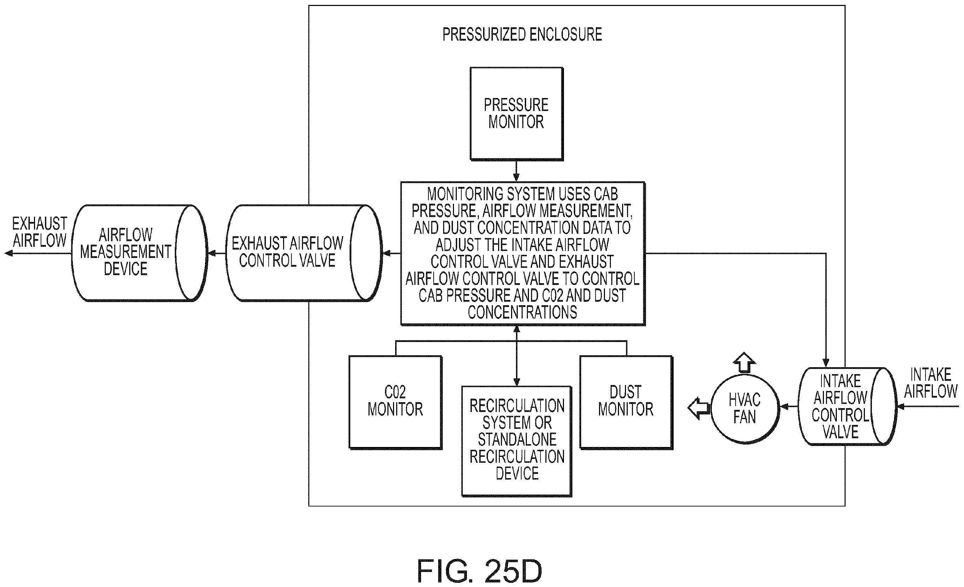

The embodiment of Figures 25A to 25D is similar to that of Figures 12A to 12C, except that the exhaust airflow measurement device 4 is included. Therefore, the advisor module receives data from the exhaust airflow measurement device 4, the CO₂ sensor, the dust sensor and the pressure sensor. In response to determining that the internal environment is not at one or more of the predetermined levels, or within one or more of the predetermined ranges, the advisor module transmits a control signal to the intake air valve 2, the exhaust air valve 3 and/or the stand-alone recirculation filtration device 5 to bring the internal environment to the predetermined levels and/or within the predetermined range(s).

The embodiment of Figure 19 differs from the previous embodiment in that the temperature sensor is included. Therefore, the advisor module receives data from the pressure sensor and the temperature sensor. In response to determining that the internal environment is not within the predetermined range(s) (i.e., the predetermined pressure range and/or the predetermined temperature range), the advisor module transmits a control signal to the intake air valve 2 and/or the exhaust air valve 3 to bring the internal environment to within the predetermined range(s).

The advisor module may automatically and autonomously maintain safe and consistent pressure, CO₂ and dust levels within the cab or other enclosure by receiving the data from the sensors and automatically controlling the air environment within the cab based on the data from the sensors. And, when aberrant conditions do not allow for controlled variables to remain at predetermined levels or within predetermined range(s), the advisor module is programmed to issue an alarm.

### (6) Advantageous Effects

The air quality monitoring and control system continuously and automatically maintains the desired environment within the cab by analyzing the data from the various sensors and automatically adjusting the devices of the system to modify the cab environment when necessary. As a result, it is not necessary for the operator or other party to actively monitor and adjust the environment.

The air quality monitoring and control system establishes and maintains enclosure air quality by precisely monitoring, adjusting and maintaining multiple variables including, but not limited to, CO₂ (and other gases), dust, enclosure pressure, temperature, and energy draw. When variables are at predetermined levels, or within predetermined ranges, intake and exhaust airflow can be reduced to a minimal acceptable level, thus minimizing the airflow through the HVAC system, allowing the HVAC system to run at highest efficiency and reducing energy draw of the system.

The disclosed air quality monitoring and control system is comprehensive in optimizing variables to protect the operator from potential threats to air quality within the cab.

Exemplary embodiments of the present invention have been described above. It should be noted that the above exemplary embodiments are merely examples and the present invention is not limited to the detailed embodiments. It should be understood that various changes and modifications to the embodiments described herein will be apparent to those skilled in the art. Such changes and modifications can be made without departing from the spirit and scope of the present disclosure and without diminishing its intended advantages. It is therefore intended that such changes and modifications be covered by this disclosure.

## Claims

1. An air quality monitoring and control method:
providing at least one sensor inside of an enclosure;
providing an advisor module configured to receive data from the at least one sensor;
providing at least one airflow control valve regulating air between inside and outside of the enclosure; and
controlling, by the advisor module, the at least one airflow control valve based on the data received from the at least one sensor to manage air quality within the enclosure.

2. The air quality monitoring and control method according to claim 1, wherein
the at least one airflow control valve includes an intake air valve and an exhaust air valve, and
the advisor module controls at least one of the intake air valve and the exhaust air valve based on the data received from the at least one sensor.

3. The air quality monitoring and control method according to claim 1, wherein
the at least one sensor includes a pressure sensor, a CO₂ sensor, a dust sensor, and/or a temperature sensor, and
the at least one sensor is provided at the advisor module or at a position spaced from the advisor module within the enclosure.

4. The air quality monitoring and control method according to claim 1, wherein
the at least one sensor includes a plurality of sensors, and
at least one of the plurality of sensors is provided at the advisor module.

5. The air quality monitoring and control method according to claim 4, wherein
the plurality of sensors includes at least two of the following: a pressure sensor, a CO₂ sensor, a dust sensor, and a temperature sensor.

6. The air quality monitoring and control method according to claim 1, wherein
the at least one airflow control valve is a single airflow control valve and is an intake air valve or an exhaust air valve provided at one of an intake of the enclosure and an exhaust of the enclosure, respectively, and
a manual valve, or orifice, is provided at the other of the intake and the exhaust.

7. The air quality monitoring and control method according to claim 1, further comprising
providing a stand-alone recirculation filtration device in the enclosure; and
controlling, by the advisor module, the stand-alone recirculation filtration device based on the data received from the at least one sensor to control the air quality within the enclosure.

8. The air quality monitoring and control method according to claim 1, further comprising
providing an exhaust airflow measurement device configured to transmit, at predetermined intervals, an airflow measurement signal containing airflow measurement data to the advisor module; and
controlling, by the advisor module, the at least one airflow control valve based on the airflow measurement data received from the exhaust airflow measurement device.

9. The air quality monitoring and control method according to claim 8, wherein
the at least one airflow control valve is a single airflow control valve and is an intake air valve provided at an intake of the enclosure, and
the exhaust airflow measurement device is provided at an exhaust orifice of the enclosure.

10. The air quality monitoring and control method according to claim 8, wherein
the at least one airflow control valve includes an intake air valve and an exhaust air valve,
the intake air valve is provided at an intake of the enclosure, and
the exhaust air valve and the exhaust airflow measurement device are provided at an exhaust of the enclosure.

11. The air quality monitoring and control method according to claim 1, wherein
the at least one sensor includes a pressure sensor, a CO₂ sensor, a dust sensor, and a temperature sensor, and
the advisor module controls the at least one airflow control valve based on the data received from the pressure sensor, the CO₂ sensor, the dust sensor, and the temperature sensor such that one or more of a pressure level, a CO₂ level, a dust level and a temperature level within the enclosure become within corresponding predetermined ranges and/or reach corresponding predetermined threshold levels.

12. The air quality monitoring and control method according to claim 1, wherein
the at least one sensor includes a pressure sensor, a CO₂ sensor, and a dust sensor, and
the advisor module controls the at least one airflow control valve based on the data received from the pressure sensor, the CO₂ sensor, and the dust sensor such that one or more of a pressure level, a CO₂ level, and a dust level within the enclosure become within corresponding predetermined ranges and/or reach corresponding predetermined threshold levels.

13. The air quality monitoring and control method according to claim 1, wherein
the at least one sensor includes a pressure sensor and a COz sensor, and
the advisor module controls the at least one airflow control valve based on the data received from the pressure sensor and the CO₂ sensor such that one or more of a pressure level and a CO₂ level within the enclosure become within corresponding predetermined ranges and/or reach corresponding predetermined threshold levels.

14. The air quality monitoring and control method according to claim 1, wherein
the at least one sensor includes a pressure sensor, and
the advisor module controls the at least one airflow control valve based on the data received from the pressure sensor such that a pressure level within the enclosure becomes within a corresponding predetermined range or reaches a corresponding predetermined level.

15. The air quality monitoring and control method according to claim 7, wherein
the at least one sensor includes a dust sensor, and
the method further comprises controlling, by the advisor module, the stand-alone recirculation filtration device based on the data received from the dust sensor.

16. An air quality monitoring and control method:
providing at least one sensor inside of an enclosure, the at least one sensor including a dust sensor;
providing an advisor module configured to receive data from the at least one sensor;
providing a stand-alone recirculation filtration device in the enclosure; and
controlling, by the advisor module, the stand-alone recirculation filtration device based on the data received from the dust sensor to control the air quality within the enclosure.

17. An air quality monitoring and control method:
providing at least one sensor inside of an enclosure, the at least one sensor including a dust sensor;
providing an advisor module configured to receive data from the at least one sensor;
providing an HVAC airflow fan in the enclosure; and
controlling, by the advisor module, the HVAC airflow fan based on the data received from the dust sensor to control the air quality within the enclosure.
